# EUROPEAN PATENT SPECIFICATION

(11) **EP 4 554 148 B1**
(45) Date of publication and mention of the grant of the patent: **22.04.2026**
(21) Application number: 24210646.6
(22) Date of filing: 04.11.2024
(51) Int. Cl.: H04L 69/22, H04L 9/40, H04W 12/02, H04W 12/03

(54) **ENCRYPTION AND PROTECTION OF MAC HEADERS AND CONTROL FRAMES**
VERSCHLÜSSELUNG UND SCHUTZ VON MAC KOPFTEILEN UND STEUERRAHMEN
CHIFFREMENT ET PROTECTION D'EN-TÊTES MAC ET DE TRAMES DE COMMANDE

(30) Priority: 07.11.2023 US 202363596949 P; 08.03.2024 US 202463562909 P; 28.10.2024 US 202418928762
(43) Date of publication of application: 14.05.2025
(73) Proprietor: Apple Inc., Cupertino, CA 95014 (US)
(72) Inventor: KNECKT, Jarkko L., Cupertino, California, 95014 (US); EPSTEIN, Leonid, Cupertino, California, 95014 (US); MYERS, Steven A, Cupertino, California, 95014 (US); LIU, Yong, Cupertino, California, 95014 (US); DOMINGUEZ, Charles F., Cupertino, California, 95014 (US); BRIGGS, Elliot S., Cupertino, California, 95014 (US); REUVEN, Nisan, Cupertino, California, 95014 (US); SEOK, Yong Ho, Cupertino, California, 95014 (US); BOGER, Yeol, Cupertino, California, 95014 (US)
(74) Representative: Simmons & Simmons

(56) References cited:
- CN-A- 116 456 333
- US-A1- 2014 064 481
- US-B2- 7 555 128

## Description

### FIELD

The present application relates to wireless communications, including techniques for encryption of headers and/or control frames in a wireless networking system.

### DESCRIPTION OF THE RELATED ART

Wireless communication systems can be rapidly growing in usage. Further, wireless communication technology can have evolved from voice-only communications to also include the transmission of data, such as Internet and multimedia content. A popular short/intermediate range wireless communication standard can be wireless local area network (WLAN). Most modern WLANs can be based on the IEEE 802.11 standard (and/or 802.11, for short) and can be marketed under the Wi-Fi brand name. WLAN networks can link one or more devices to a wireless access point, which in turn provides connectivity to the wider area Internet.

In 802.11 systems, devices that wirelessly connect to each other can be referred to as "stations", "mobile stations", "user devices", "user equipment", or STA or UE for short. Wireless stations can be either wireless access points or wireless clients (and/or mobile stations). Access points (APs), which can be also referred to as wireless routers, act as base stations for the wireless network. APs transmit and receive radio frequency signals for communication with wireless client devices. APs can also couple to the Internet in a wired and/or wireless fashion. Wireless clients operating on an 802.11 network can be any of various devices such as laptops, tablet devices, smart phones, smart watches, or fixed devices such as desktop computers. Wireless client devices can be referred to herein as user equipment (and/or UE for short). Some wireless client devices can be also collectively referred to herein as mobile devices or mobile stations (although, as noted above, wireless client devices overall can be stationary devices as well).

Mobile electronic devices can take the form of smart phones or tablets that a user typically carries. Wearable devices (also referred to as accessory devices) can be a newer form of mobile electronic device, one example being smart watches. Additionally, low-cost low-complexity wireless devices intended for stationary or nomadic deployment can be also proliferating as part of the developing "Internet of Things". In other words, there can be an increasingly wide range of desired device complexities, capabilities, traffic patterns, and other characteristics.

Some WLANs can utilize encryption. However, according to existing techniques some types of frames and/or portions of frames are not encrypted.

US 7,555,128 discloses various cryptographic systems for WLAN systems, in particular to provide network equipment invisibility.

### SUMMARY

The invention is defined by the independent claims. A selection of optional features of the invention is set out in the dependent claims.

### BRIEF DESCRIPTION OF THE DRAWINGS

A better understanding of the present subject matter can be obtained when the following detailed description of the embodiments can be considered in conjunction with the following drawings.
Figure 1 illustrates an example wireless communication system utilizing protection of MAC headers and/or control frames, according to some embodiments.
Figure 2 illustrates an example simplified block diagram of a wireless device capable of performing protection of MAC headers and/or control frames, according to some embodiments.
Figure 3 illustrates an example WLAN communication system utilizing protection of MAC headers and/or control frames, according to some embodiments.
Figure 4 illustrates an example simplified block diagram of a WLAN Access Point (AP) capable of performing protection of MAC headers and/or control frames, according to some embodiments.
Figure 5 illustrates an example simplified block diagram of a wireless station (STA) capable of performing protection of MAC headers and/or control frames, according to some embodiments.
Figure 6 illustrates an example simplified block diagram of a wireless node capable of performing protection of MAC headers and/or control frames, according to some embodiments.
Figures 7-8 illustrates examples of MLDs capable of performing protection of MAC headers and/or control frames, according to some embodiments.
Figure 9 illustrates an example method of encryption and protection of MAC headers and/or control frames, according to some embodiments.
Figure 10A and Figure 10B illustrates an example method of encryption and protection of MAC headers and/or control frames, according to some embodiments.
Figure 11 illustrates an example method of transmission using encryption and protection of MAC headers and/or control frames, according to some embodiments.
Figure 12 illustrates an example method of reception using encryption and protection of MAC headers and/or control frames, according to some embodiments.
Figures 13-51 illustrate aspects of encryption and protection of MAC headers and/or control frames, according to some embodiments.

While the features described herein can be susceptible to various modifications and alternative forms, specific embodiments thereof can be shown by way of example in the drawings and can be herein described in detail. It should be understood, however, that the drawings and detailed description thereto can be not intended to be limiting to the particular form disclosed, but on the contrary, the intention can be to cover all modifications, equivalents and alternatives falling within the scope of the subject matter as defined by the appended claims.

### DETAILED DESCRIPTION

### Acronyms

Various acronyms can be used throughout the present application. Definitions of the most prominently used acronyms that can appear throughout the present application can be provided below:
**UE:** User Equipment
**AP:** Access Point
**STA:** Wireless Station
**TX:** Transmission/Transmit
**RX:** Reception/Receive
**MLD:** Multi-link Device
**LAN:** Local Area Network
**WLAN:** Wireless LAN
**RAT:** Radio Access Technology
**ACK:** Acknowledgment
**BA:** Block Acknowledgment
**NACK:** Negative Acknowledgment
**N-BA:** Negative Block Acknowledgment
**TSF:** Timing Synchronization Function
**QoS:** Quality of Service

### Terminology

The following can be a glossary of terms used in this disclosure:
**Memory Medium** - Any of various types of non-transitory memory devices or storage devices. The term "memory medium" can be intended to include an installation medium, e.g., a CD-ROM, floppy disks, or tape device; a computer system memory or random access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The memory medium can include other types of non-transitory memory as well or combinations thereof. In addition, the memory medium can be located in a first computer system in which the programs can be executed, or can be located in a second different computer system which connects to the first computer system over a network, such as the Internet. In the latter instance, the second computer system can provide program instructions to the first computer for execution. The term "memory medium" can include two or more memory mediums which can reside in different locations, e.g., in different computer systems that can be connected over a network. The memory medium can store program instructions (e.g., embodied as computer programs) that can be executed by one or more processors.
**Carrier Medium** - a memory medium as described above, as well as a physical transmission medium, such as a bus, network, and/or other physical transmission medium that conveys signals such as electrical, electromagnetic, or digital signals.
**Computer System** - any of various types of computing or processing systems, including a personal computer system (PC), mainframe computer system, workstation, network appliance, Internet appliance, personal digital assistant (PDA), television system, grid computing system, or other device or combinations of devices. In general, the term "computer system" can be broadly defined to encompass any device (and/or combination of devices) having at least one processor that executes instructions from a memory medium.
**Mobile Device (and/or Mobile Station)** - any of various types of computer systems devices which can be mobile or portable and which performs wireless communications using WLAN communication. Examples of mobile devices include mobile telephones or smart phones (e.g., iPhone^{™}, Android^{™}-based phones), and tablet computers such as iPad^{™}, Samsung Galaxy^{™}, etc. Various other types of devices would fall into this category if they include Wi-Fi or both cellular and Wi-Fi communication capabilities, such as laptop computers (e.g., MacBook^{™}), portable gaming devices (e.g., Nintendo DS^{™}, PlayStation Portable^{™}, Gameboy Advance^{™}, iPhone^{™}), portable Internet devices, and other handheld devices, as well as wearable devices such as smart watches, smart glasses, headphones, pendants, earpieces, etc. In general, the term "mobile device" can be broadly defined to encompass any electronic, computing, and/or telecommunications device (and/or combination of devices) which can be easily transported by a user and capable of wireless communication using WLAN or Wi-Fi.
**Wireless Device (and/or Wireless Station)** - any of various types of computer systems devices which performs wireless communications using WLAN communications. As used herein, the term "wireless device" can refer to a mobile device, as defined above, or to a stationary device, such as a stationary wireless client or a wireless base station. For example, a wireless device can be any type of wireless station of an 802.11 system, such as an access point (AP) or a client station (STA or UE). Further examples include televisions, media players (e.g., AppleTV^{™}, Roku^{™}, Amazon FireTV^{™}, Google Chromecast^{™}, etc.), refrigerators, laundry machines, thermostats, and so forth.
**WLAN** - The term "WLAN" can have the full breadth of its ordinary meaning, and at least includes a wireless communication network or RAT that can be serviced by WLAN access points and which provides connectivity through these access points to the Internet. Most modern WLANs can be based on IEEE 802.11 standards and can be marketed under the name "Wi-Fi". A WLAN network can be different from a cellular network.
**Processing Element** - refers to various implementations of digital circuitry that perform a function in a computer system. Additionally, processing element can refer to various implementations of analog or mixed-signal (combination of analog and digital) circuitry that perform a function (and/or functions) in a computer or computer system. Processing elements include, for example, circuits such as an integrated circuit (IC), ASIC (Application Specific Integrated Circuit), portions or circuits of individual processor cores, entire processor cores, individual processors, programmable hardware devices such as a field programmable gate array (FPGA), and/or larger portions of systems that include multiple processors.
**Automatically** - refers to an action or operation performed by a computer system (e.g., software executed by the computer system) or device (e.g., circuitry, programmable hardware elements, ASICs, etc.), without user input directly specifying or performing the action or operation. Thus, the term "automatically" can be in contrast to an operation being manually performed or specified by the user, where the user provides input to directly perform the operation. An automatic procedure can be initiated by input provided by the user, but the subsequent actions that can be performed "automatically" can be not specified by the user, e.g., can be not performed "manually", where the user specifies each action to perform. For example, a user filling out an electronic form by selecting each field and providing input specifying information (e.g., by typing information, selecting check boxes, radio selections, etc.) can be filling out the form manually, even though the computer system must update the form in response to the user actions. The form can be automatically filled out by the computer system where the computer system (e.g., software executing on the computer system) analyzes the fields of the form and fills in the form without any user input specifying the answers to the fields. As indicated above, the user can invoke the automatic filling of the form, but can be not involved in the actual filling of the form (e.g., the user can be not manually specifying answers to fields but rather they can be being automatically completed). The present specification provides various examples of operations being automatically performed in response to actions the user can have taken.
**Concurrent** - refers to parallel execution or performance, where tasks, processes, signaling, messaging, or programs can be performed in an at least partially overlapping manner. For example, concurrency can be implemented using "strong" or strict parallelism, where tasks can be performed (at least partially) in parallel on respective computational elements, or using "weak parallelism", where the tasks can be performed in an interleaved manner, e.g., by time multiplexing of execution threads.
**Configured to** - Various components can be described as "configured to" perform a task or tasks. In such contexts, "configured to" can be a broad recitation generally meaning "having structure that" performs the task or tasks during operation. As such, the component can be configured to perform the task even when the component can be not currently performing that task (e.g., a set of electrical conductors can be configured to electrically connect a module to another module, even when the two modules can be not connected). In some contexts, "configured to" can be a broad recitation of structure generally meaning "having circuitry that" performs the task or tasks during operation. As such, the component can be configured to perform the task even when the component can be not currently on. In general, the circuitry that forms the structure corresponding to "configured to" can include hardware circuits.

Various components can be described as performing a task or tasks, for convenience in the description. Such descriptions should be interpreted as including the phrase "configured to." Reciting a component that can be configured to perform one or more tasks can be expressly intended not to invoke 35 U.S.C. § 112(f) interpretation for that component.

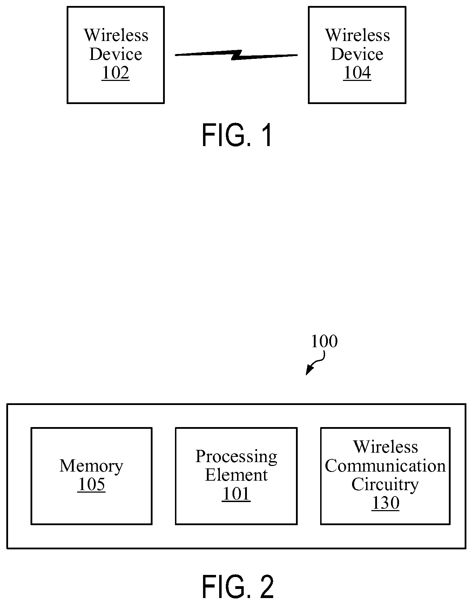

### Figures 1-2 - Wireless Communication System

Figure 1 illustrates an exemplary (and simplified) wireless communication system in which aspects of this disclosure can be implemented. It can be noted that the system of Figure 1 can be merely one example of a possible system, and embodiments of this disclosure can be implemented in any of various systems, as desired.

As shown, the exemplary wireless communication system includes a ("first") wireless device 102 in communication with another ("second") wireless device. The first wireless device 102 and the second wireless device 104 can communicate wirelessly using any of a variety of wireless communication techniques, potentially including ranging wireless communication techniques.

As one possibility, the first wireless device 102 and the second wireless device 104 can perform communication using wireless local area networking (WLAN) communication technology (e.g., IEEE 802.11 / Wi-Fi based communication) and/or techniques based on WLAN wireless communication. One or both of the wireless device 102 and the wireless device 104 can also be capable of communicating via one or more additional wireless communication protocols, such as any of Bluetooth (BT), Bluetooth Low Energy (BLE), near field communication (NFC), cellular (e.g., 5G NR), etc. One or both of the wireless device 102 and the wireless device 104 can also be capable of using global positioning system (GPS) and/or similar technologies.

The wireless devices 102 and 104 can be any of a variety of types of wireless device. As one possibility, one or more of the wireless devices 102 and/or 104 can be a substantially portable wireless user equipment (UE) device, such as a smart phone, hand-held device, a wearable device such as a smart watch, a tablet, a motor vehicle, or virtually any type of wireless device. As another possibility, one or more of the wireless devices 102 and/or 104 can be a substantially stationary device, such as a set top box, media player (e.g., an audio or audiovisual device), gaming console, desktop computer, appliance, door, access point, base station, or any of a variety of other types of device.

Each of the wireless devices 102 and 104 can include wireless communication circuitry configured to facilitate the performance of wireless communication, which can include various digital and/or analog radio frequency (RF) components, a processor that can be configured to execute program instructions stored in memory, a programmable hardware element such as a field-programmable gate array (FPGA), and/or any of various other components. The wireless device 102 and/or the wireless device 104 can perform any of the method embodiments described herein, or any portion of any of the method embodiments described herein, using any or all of such components.

Each of the wireless devices 102 and 104 can include one or more antennas for communicating using one or more wireless communication protocols. In some cases, one or more parts of a receive and/or transmit chain can be shared between multiple wireless communication standards; for example, a device can be configured to communicate using either of Bluetooth or Wi-Fi using partially or entirely shared wireless communication circuitry (e.g., using a shared radio or at least shared radio components). The shared communication circuitry can include a single antenna, or can include multiple antennas (e.g., for MIMO) for performing wireless communications. Alternatively, a device can include separate transmit and/or receive chains (e.g., including separate antennas and other radio components) for each wireless communication protocol with which it can be configured to communicate. As a further possibility, a device can include one or more radios or radio components which can be shared between multiple wireless communication protocols, and one or more radios or radio components which can be used exclusively by a single wireless communication protocol. For example, a device might include a shared radio for communicating using one or more of LTE, CDMA2000 1xRTT, GSM, and/or 5G NR, and separate radios for communicating using each of Wi-Fi and Bluetooth. Other configurations can be also possible and contemplated.

As previously noted, aspects of this disclosure can be implemented in conjunction with the wireless communication system of Figure 1. For example, a wireless device (e.g., either of wireless devices 102 or 104) can be configured to perform methods for encryption and/or protection of MAC headers and/or control frames. Such a method can include receive, from a higher layer, a payload for transmission in a first message to a receiver and generate a header for transmission with the payload in the first message. The device can perform a first encryption of the header to generate a first encrypted header, wherein the first encryption is according to a time interval associated with transmission of the first message and perform a second encryption of the first encrypted header to generate a second encrypted header, wherein the second encryption is according to an attribute of the first message. The device can append the second encrypted header to the payload to generate the first message; and encode the first message for transmission to the receiver.

Figure 2 illustrates an exemplary wireless device 100 (e.g., corresponding to wireless devices 102 and/or 104) that can be configured for use in conjunction with various aspects of the present disclosure. The device 100 can be any of a variety of types of device and can be configured to perform any of a variety of types of functionality. The device 100 can be a substantially portable device or can be a substantially stationary device, potentially including any of a variety of types of device. The device 100 can be configured to perform one or more ranging wireless communication techniques or features, such as any of the techniques or features illustrated and/or described subsequently herein with respect to any or all of the Figures.

As shown, the device 100 can include a processing element 101. The processing element can include or be coupled to one or more memory elements. For example, the device 100 can include one or more memory media (e.g., memory 105), which can include any of a variety of types of memory and can serve any of a variety of functions. For example, memory 105 could be RAM serving as a system memory for processing element 101. Other types and functions can be also possible.

Additionally, the device 100 can include wireless communication circuitry 130. The wireless communication circuitry can include any of a variety of communication elements (e.g., antenna(s) for wireless communication, analog and/or digital communication circuitry/controllers, etc.) and can enable the device to wirelessly communicate using one or more wireless communication protocols. In some embodiments, the device 100 can be a multi-link device (MLD), e.g., capable of communicating using multiple different wireless links (e.g., of WLAN and/or other technologies) simultaneously.

Note that in some cases, the wireless communication circuitry 130 can include its own processing element (e.g., a baseband processor), e.g., in addition to the processing element 101. For example, the processing element 101 can be an 'application processor' whose primary function can be to support application layer operations in the device 100, while the wireless communication circuitry 130 can be a 'baseband processor' whose primary function can be to support baseband layer operations (e.g., to facilitate wireless communication between the device 100 and other devices) in the device 100. In other words, in some cases the device 100 can include multiple processing elements (e.g., can be a multi-processor device). Other configurations (e.g., instead of or in addition to an application processor / baseband processor configuration) utilizing a multi-processor architecture can be also possible.

The device 100 can additionally include any of a variety of other components (not shown) for implementing device functionality, depending on the intended functionality of the device 100, which can include further processing and/or memory elements (e.g., audio processing circuitry), one or more power supply elements (which can rely on battery power and/or an external power source) user interface elements (e.g., display, speaker, microphone, camera, keyboard, mouse, touchscreen, etc.), and/or any of various other components.

The components of the device 100, such as processing element 101, memory 105, and wireless communication circuitry 130, can be operatively coupled via one or more interconnection interfaces, which can include any of a variety of types of interface, possibly including a combination of multiple types of interface. As one example, a USB high-speed inter-chip (HSIC) interface can be provided for inter-chip communications between processing elements. Alternatively (and/or in addition), a universal asynchronous receiver transmitter (UART) interface, a serial peripheral interface (SPI), inter-integrated circuit (I2C), system management bus (SMBus), and/or any of a variety of other communication interfaces can be used for communications between various device components. Other types of interfaces (e.g., intra-chip interfaces for communication within processing element 101, peripheral interfaces for communication with peripheral components within or external to device 100, etc.) can also be provided as part of device 100.

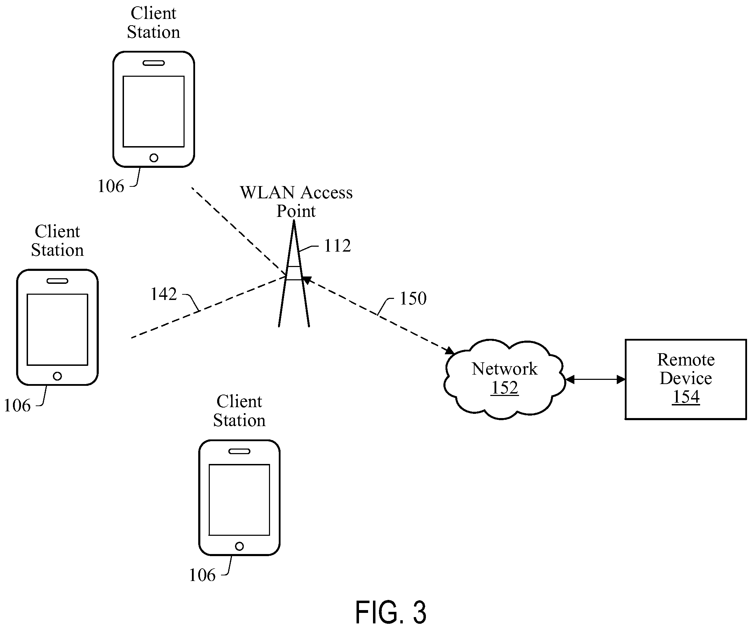

### Figure 3 - WLAN System

Figure 3 illustrates an example WLAN system according to some embodiments. As shown, the exemplary WLAN system includes a plurality of wireless client stations or devices (e.g., STAs or user equipment (UEs)), 106 that can be configured to communicate over a wireless communication channel 142 with an Access Point (AP) 112. The AP 112 can be a Wi-Fi access point. The AP 112 can communicate via a wired and/or a wireless communication channel 150 with one or more other electronic devices (not shown) and/or another network 152, such as the Internet. Additional electronic devices, such as the remote device 154, can communicate with components of the WLAN system via the network 152. For example, the remote device 154 can be another wireless client station, a server associated with an application executing on one of the STAs 106, etc. The WLAN system can be configured to operate according to any of various communications standards, such as the various IEEE 802.11 standards. In some embodiments, at least one wireless device 106 can be configured to communicate directly with one or more neighboring mobile devices, without use of the access point 112.

Further, in some embodiments, a wireless device 106 (which can be an exemplary implementation of device 100) can be configured to communicate directly with another wireless device 106. For example, two or more wireless devices (e.g., STAs) can communicate using the techniques disclosed herein (e.g., without either being an AP).

Further, in some embodiments, as further described below, a wireless device 106 can be configured to perform methods for encryption and protection of MAC headers and/or control frames.

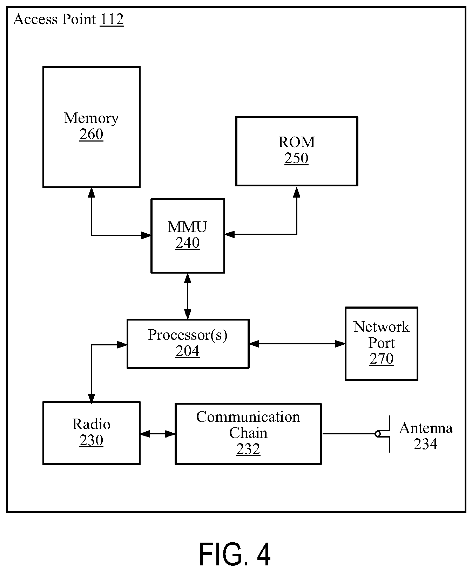

### Figure 4 - Access Point Block Diagram

Figure 4 illustrates an exemplary block diagram of an access point (AP) 112, which can be one possible exemplary implementation of the device 100 illustrated in Figure 4. It can be noted that the block diagram of the AP of Figure 4 can be only one example of a possible system. As shown, the AP 112 can include processor(s) 204 which can execute program instructions for the AP 112. The processor(s) 204 can also be coupled (directly or indirectly) to memory management unit (MMU) 240, which can be configured to receive addresses from the processor(s) 204 and to translate those addresses to locations in memory (e.g., memory 260 and read only memory (ROM) 250) or to other circuits or devices.

The AP 112 can include at least one network port 270. The network port 270 can be configured to couple to a wired network and provide a plurality of devices, such as mobile devices 106, access to the Internet. For example, the network port 270 (and/or an additional network port) can be configured to couple to a local network, such as a home network or an enterprise network. For example, port 270 can be an Ethernet port. The local network can provide connectivity to additional networks, such as the Internet.

The AP 112 can include at least one antenna 234, which can be configured to operate as a wireless transceiver and can be further configured to communicate with mobile device 106 via wireless communication circuitry 230. The antenna 234 communicates with the wireless communication circuitry 230 via communication chain 232. Communication chain 232 can include one or more receive chains, one or more transmit chains or both. The wireless communication circuitry 230 can be configured to communicate via Wi-Fi or WLAN, e.g., 802.11. The wireless communication circuitry 230 can also, or alternatively, be configured to communicate via various other wireless communication technologies, including, but not limited to, Long-Term Evolution (LTE), LTE Advanced (LTE-A), Global System for Mobile (GSM), Wideband Code Division Multiple Access (WCDMA), CDMA2000, etc., for example when the AP can be co-located with a base station in case of a small cell, or in other instances when it can be desirable for the AP 112 to communicate via various different wireless communication technologies.

Further, in some embodiments, as further described below, AP 112 can be configured to perform methods for encryption and protection of MAC headers and/or control frames.

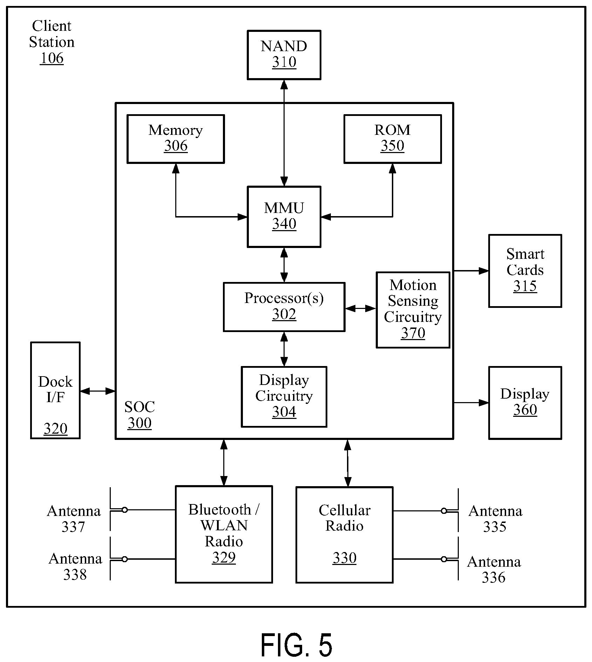

### Figure 5 - Client Station Block Diagram

Figure 5 illustrates an example simplified block diagram of a client station 106, which can be one possible exemplary implementation of the device 100 illustrated in Figure 4. According to embodiments, client station 106 can be a user equipment (UE) device, a mobile device or mobile station, and/or a wireless device or wireless station. As shown, the client station 106 can include a system on chip (SOC) 300, which can include portions for various purposes. The SOC 300 can be coupled to various other circuits of the client station 106. For example, the client station 106 can include various types of memory (e.g., including NAND flash 310), a connector interface (I/F) (and/or dock) 320 (e.g., for coupling to a computer system, dock, charging station, etc.), the display 360, cellular communication circuitry (e.g., cellular radio) 330 such as for 5G NR, LTE, GSM, etc., and short to medium range wireless communication circuitry (e.g., Bluetooth^{™}/WLAN radio) 329 (e.g., Bluetooth^{™} and WLAN circuitry). The client station 106 can further include one or more smart cards 315 that incorporate SIM (Subscriber Identity Module) functionality, such as one or more UICC(s) (Universal Integrated Circuit Card(s)). The cellular communication circuitry 330 can couple to one or more antennas, such as antennas 335 and 336 as shown. The short to medium range wireless communication circuitry 329 can also couple to one or more antennas, such as antennas 337 and 338 as shown. Alternatively, the short to medium range wireless communication circuitry 329 can couple to the antennas 335 and 336 in addition to, or instead of, coupling to the antennas 337 and 338. The short to medium range wireless communication circuitry 329 can include multiple receive chains and/or multiple transmit chains for receiving and/or transmitting multiple spatial streams, such as in a multiple-input multiple output (MIMO) configuration. Some or all components of the short to medium range wireless communication circuitry 329 and/or the cellular communication circuitry 330 can be used for ranging communications, e.g., using WLAN, Bluetooth, and/or cellular communications.

As shown, the SOC 300 can include processor(s) 302, which can execute program instructions for the client station 106 and display circuitry 304, which can perform graphics processing and provide display signals to the display 360. The SOC 300 can also include motion sensing circuitry 370 which can detect motion of the client station 106, for example using a gyroscope, accelerometer, and/or any of various other motion sensing components. The processor(s) 302 can also be coupled to memory management unit (MMU) 340, which can be configured to receive addresses from the processor(s) 302 and translate those addresses to locations in memory (e.g., memory 306, read only memory (ROM) 350, NAND flash memory 310) and/or to other circuits or devices, such as the display circuitry 304, cellular communication circuitry 330, short range wireless communication circuitry 329, connector interface (I/F) 320, and/or display 360. The MMU 340 can be configured to perform memory protection and page table translation or set up. In some embodiments, the MMU 340 can be included as a portion of the processor(s) 302.

As noted above, the client station 106 can be configured to communicate wirelessly directly with one or more neighboring client stations. The client station 106 can be configured to communicate according to a WLAN RAT for communication in a WLAN network, such as that shown in Figure 3 or for ranging as shown in Figure 1.

As described herein, the client station 106 can include hardware and software components for implementing the features described herein. For example, the processor 302 of the client station 106 can be configured to implement part or all of the features described herein, e.g., by executing program instructions stored on a memory medium (e.g., a non-transitory computer-readable memory medium). Alternatively (and/or in addition), processor 302 can be configured as a programmable hardware element, such as an FPGA (Field Programmable Gate Array), or as an ASIC (Application Specific Integrated Circuit). Alternatively (and/or in addition) the processor 302 of the UE 106, in conjunction with one or more of the other components 300, 304, 306, 310, 315, 320,329, 330, 335, 336, 337, 338, 340, 350, 360, 370 can be configured to implement part or all of the features described herein.

In addition, as described herein, processor 302 can include one or more processing elements. Thus, processor 302 can include one or more integrated circuits (ICs) that can be configured to perform the functions of processor 302. In addition, each integrated circuit can include circuitry (e.g., first circuitry, second circuitry, etc.) configured to perform the functions of processor(s) 204.

Further, as described herein, cellular communication circuitry 330 and short-range wireless communication circuitry 329 can each include one or more processing elements. In other words, one or more processing elements can be included in cellular communication circuitry 330 and also in short range wireless communication circuitry 329. Thus, each of cellular communication circuitry 330 and short-range wireless communication circuitry 329 can include one or more integrated circuits (ICs) that can be configured to perform the functions of cellular communication circuitry 330 and short-range wireless communication circuitry 329, respectively. In addition, each integrated circuit can include circuitry (e.g., first circuitry, second circuitry, etc.) configured to perform the functions of cellular communication circuitry 330 and short-range wireless communication circuitry 329.

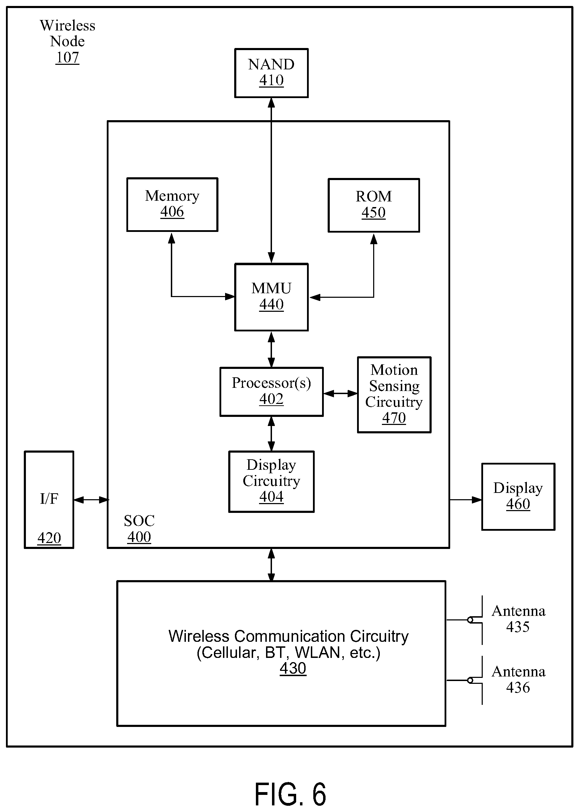

### Figure 6 - Wireless Node Block Diagram

Figure 6 illustrates an example block diagram of a wireless node 107, which represents an exemplary implementation of the device 106 illustrated in Figure 5. As shown, the wireless node 107 can include a system on chip (SOC) 400, which can include portions for various purposes. For example, as shown, the SOC 400 can include processor(s) 402 which can execute program instructions for the wireless node 107, and display circuitry 404 which can perform graphics processing and provide display signals to the display 460. The SOC 400 can also include motion sensing circuitry 470 which can detect motion of the wireless node 107, for example using a gyroscope, accelerometer, and/or any of various other motion sensing components. The processor(s) 402 can also be coupled to memory management unit (MMU) 440, which can be configured to receive addresses from the processor(s) 402 and translate those addresses to locations in memory (e.g., memory 406, read only memory (ROM) 450, flash memory 410). The MMU 440 can be configured to perform memory protection and page table translation or set up. In some embodiments, the MMU 440 can be included as a portion of the processor(s) 402.

As shown, the SOC 400 can be coupled to various other circuits of the wireless node 107. For example, the wireless node 107 can include various types of memory (e.g., including NAND flash 410), a connector interface 420 (e.g., for coupling to a computer system, dock, charging station, etc.), the display 460, and wireless communication circuitry 430 (e.g., for 5G NR, LTE, LTE-A, CDMA2000, Bluetooth, Wi-Fi, NFC, GPS, etc.).

The wireless node 107 can include at least one antenna, and in some embodiments, multiple antennas 435 and 436, for performing wireless communication with access points and/or other devices. For example, the wireless node 107 can use antennas 435 and 436 to perform the wireless communication. As noted above, the wireless node 107 can in some embodiments be configured to communicate wirelessly using a plurality of wireless communication standards or radio access technologies (RATs).

The wireless communication circuitry 430 can include one or more logics, SOCs, modules, ICs, and/or processors etc. This circuitry can enable the wireless node 107 to perform Wi-Fi communications, e.g., on an 802.11 network. This circuitry can enable the wireless node 107 to perform Bluetooth communications. This circuitry can enable the wireless node to perform cellular communication according to one or more cellular communication technologies. Some or all components of the wireless communication circuitry 430 can be used for wireless communications, e.g., using WLAN, Bluetooth, and/or cellular communications.

As described herein, wireless node 107 can include hardware and software components for implementing embodiments of this disclosure. For example, one or more components of the wireless communication circuitry 430 (e.g., such as Wi-Fi module or processor) of the wireless node 107 can be configured to implement part or all of the methods described herein, e.g., by a processor executing program instructions stored on a memory medium (e.g., a non-transitory computer-readable memory medium), a processor configured as an FPGA (Field Programmable Gate Array), and/or using dedicated hardware components, which can include an ASIC (Application Specific Integrated Circuit).

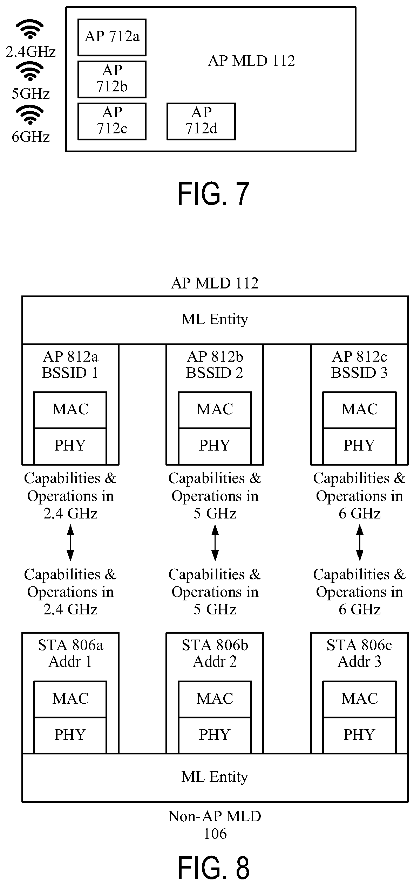

### Figures 7-8 - Multi-Link Device (MLD) operation

IEEE 802.11be can include Multi-link Device (MLD) capabilities. In current implementations, an access point (AP) Multi Link Device (MLD) node can manage its affiliated APs. Thus, an AP MLD node can modify, add, and/or subtract affiliated APs to increase capacity, manage Basic Service Sets (BSSs) interference and coverage, including switching APs to operate in channels with least interference, and/or steer associated non-AP MLD nodes to operate on best performing APs and/or AP MLD nodes.

Figure 7 illustrates an AP MLD 112, according to some embodiments. The AP MLD can operate any number of affiliated APs, e.g., APs 712a, 712b, 712c, and 712d in the illustrated example. The affiliated APs can operate on any of various frequency bands. Affiliated APs can operate on different frequency ranges (e.g., channels) of the same band, or on different frequency bands.

The AP MLD can provide the affiliated APs from a single physical device, e.g., a single shared housing and potentially using the same antenna(s). In some embodiments, the AP MLD can provide the APs from multiple distinct devices (e.g., a first device can provide one or more APs, a second device can provide a different one or more APs, etc.). In some embodiments, various affiliated APs can be separated spatially (e.g., beams in different directions, using different antennas with a shared housing (e.g., antennas of a same physical device), and/or of different devices, etc.).

In some embodiments, spatially separated affiliated APs can operate on a same (or overlapping) channel(s).

Figure 8 illustrates an AP MLD 112 in communication with a non-AP MLD 106, according to some embodiments.

As shown, the AP MLD 112 can operate three affiliated APs. In the illustrated example, AP 812a can operate in a 2.4 GHz band, AP 812b can operate in a 5 GHz band, and AP 812c can operate in a 6 GHz band. It will be appreciated that any number of affiliated APs can be used in any combination of bands. For example, the AP MLD can operate multiple affiliated APs in one band and/or may not operate any affiliated APs in a band. The affiliated APs can include various layers, e.g., media access control (MAC) and/or physical (PHY) layers, among various possibilities. The affiliated APs can use different basic service sets (BSS) and/or different BSS identifiers (BSSID), e.g., BSSIDs 1-3.

As shown, the non-AP MLD 106 can operate three affiliated STAs, e.g., corresponding to the three affiliated APs. In the illustrated example, STA 806a can operate in the 2.4 GHz band, STA 806b can operate in a 5 GHz band, and STA 806c can operate in a 6 GHz band. The STAs can communicate with the corresponding APs. It will be appreciated that any number of affiliated STAs can be used in any combination of bands. For example, the non-AP MLD can operate multiple affiliated STAs in one band and/or may not operate any affiliated STAs in a band. The non-AP MLD can operate STAs corresponding to some, none, or all of the APs of the AP MLD. The affiliated STAs can include various layers, e.g., PHY and/or MAC layers, among various possibilities. The affiliated STAs can use different addresses, e.g., Addr 1-3 as shown.

The non-AP MLD can provide the affiliated STAs from a single physical device, e.g., a single shared housing and potentially using the same antenna(s). In some embodiments, the non-AP MLD can provide the STAs from multiple distinct devices (e.g., a first device can provide one or more STAs, a second device can provide a different one or more STAs, etc.). In some embodiments, various affiliated STAs can be separated spatially (e.g., beams in different directions, using different antennas with a shared housing (e.g., antennas of a same physical device), and/or of different devices, etc.).

The various affiliated STAs and APs can communicate concurrently / simultaneously. For example, STA 806a can exchange uplink and/or downlink data with AP 812a on a first link while STA 806b exchanges uplink and/or downlink data with AP 812b on a second link, etc. It will be appreciated that such concurrent communication can include (e.g., different) data being exchanged at the same time, overlapping times, and/or different times on different links. For example, data between the AP MLD and non-AP MLD can be routed over the first available link and/or a link selected based on other criteria (e.g., lowest energy use, etc.). For example, a first packet or portion of data can be sent over a first link and concurrently a second packet or portion of data can be sent over a second link.

In some embodiments, the AP MLD and non-AP MLD can include respective ML entities. An ML entity can provide upper MAC functionality that control the separate APs and/or STAs and can control traffic delivery through available links, e.g., between the various APs and STAs. The respective MLDs (e.g., AP and non-AP) can have only one respective MAC SAP interface. The MAC SAP interface can connect the MLD to the distribution system that can deliver traffic to/from the MLD from the internet. For example, as a result of having a single MAC SAP interface, all affiliated APs of an AP MLD can be visible as one device (e.g., the AP MLD) toward internet. The ML entity can manage this interface. The ML entity can manage transmission buffering (e.g., bookkeeping and link selection in the transmitter) and data re-order buffering in reception (e.g., combination of the data that can be transmitted in different links).

The AP MLD 112 and non-AP MLD 106 can exchange information about their respective operations, operating parameters, and/or capabilities.

The non-AP MLD can have various capabilities for operating a STA in a particular band. The capabilities can be different for different bands. For example, the capabilities in a band can describe the maximum (e.g., fastest, most flexible, most powerful, highest throughput, etc.) parameter values that a STA of the non-AP MLD can use. Operations or operating parameters can describe the parameter values that can be currently in use or planned to be in use at a future time.

For example, the parameters can include an applicable PHY version and its parameters. The parameters can describe supported services and transmission formats that can be available. The parameters can also describe available resources, bandwidths and number of spatial streams. The parameters can describe power save support parameters which can enable low power transmissions.

In some embodiments, the links can be located so closely (e.g., spatially and/or in frequency), that a non-AP STA can not operate them independently (e.g., due to limits of the device and/or to manage resources or performance). APs can support STAs (e.g., non-AP MLDs) that can be not capable to simultaneously transmit and receive on the link pair.

In some embodiments, the non-AP MLD can operate STAs communicating with multiple AP-MLDs. For example, a first STA can communicate with a first AP MLD and a second STA can communicate with a second AP MLD. Similarly, an AP MLD can communicate with multiple STAs. For example, one affiliated AP can communicate with multiple STAs.

In the illustrated example, the non-AP MLD operates a number of STAs equal to the number of APs provided by the AP MLD. However, different numbers can be possible. For example, the AP MLD can provide more APs than the number of STAs operated by the non-AP MLD or vice versa. The number of APs and/or number of STAs can change over time.

### Methods of Transmission Obfuscations and De-obfuscation

Randomized media access control (MAC) addresses can be used to reduce or avoid STA tracking by changing the STA addresses periodically. The MAC headers can be transmitted clear over-the-air (OTA). Eavesdroppers can track STA by using address and association identifier (AID) values transmitted clear OTA. Tracking can be possible also on continuous UL and DL Sequence Numbers (SN) and Packet Numbers (PN).

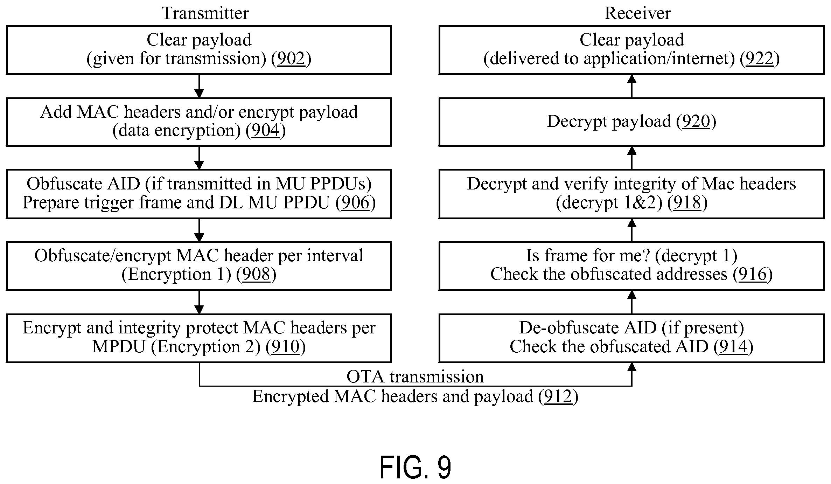

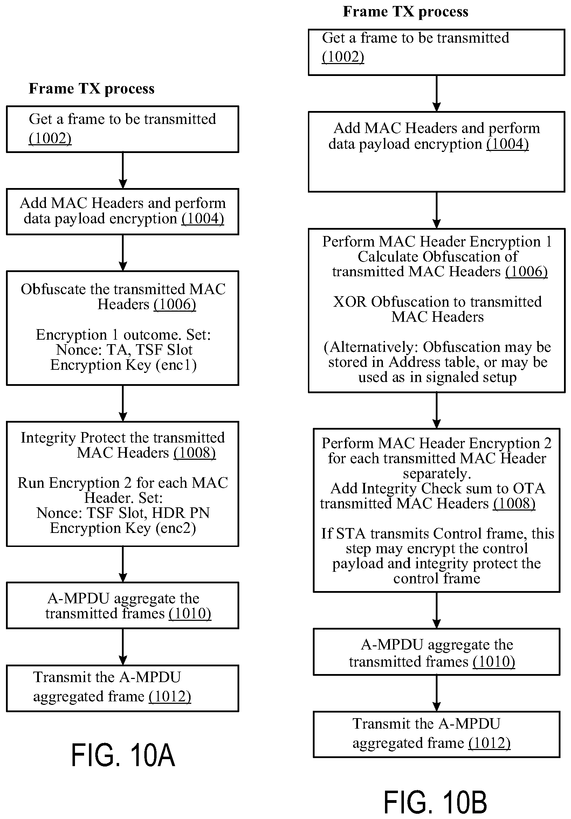

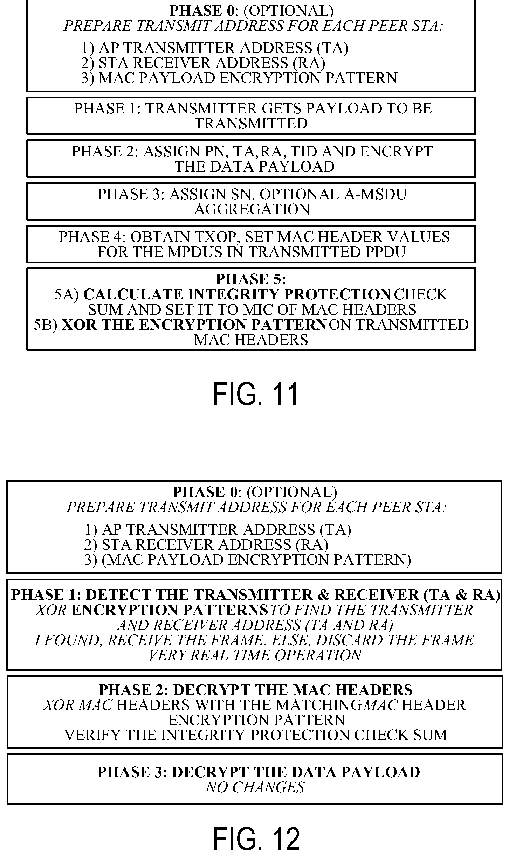

Figures 9-12 illustrate methods for obfuscating transmissions and receiving obfuscated transmissions (e.g., and interpreting/de-obfuscating them), according to some embodiments. It will be appreciated that these methods can be used separately or together. They incorporate different levels of detail and/or focus on different aspects. Figures 9-12 can be considered together, e.g., as inter-related and/or overlapping methods. The remaining Figures illustrate details, examples, and/or other aspects of these methods and/or devices which can perform and/or be involved in the methods. Figure 9 illustrates an overall process including both the transmitter and receiver operations. Figures 10A and 10B illustrates some aspects of the transmitter operations, e.g., with different details in Figure 10A vs Figure 10B. Figure 11 illustrates further aspects of the transmitter operation. Figure 12 illustrates further aspects of the receiver operation. It will be appreciated that a device can operate as either or both a transmitter or receiver at the same or different times.

Figure 9 illustrates MAC headers Encryption and Decryption operation flow, according to some embodiments. The methods shown can be used in conjunction with any of the systems, methods, or devices shown in the Figures, among other devices. In various embodiments, some of the method elements shown can be performed concurrently, in a different order than shown, or can be omitted. Additional method elements can also be performed as desired. As shown, this method can operate as follows.

A processor (e.g., a baseband processor, etc.) of a transmitting wireless device (e.g., a transmitter) can receive a clear payload (902), according to some embodiments. In some embodiments, data payload encryption and decryption (assuming GCMP-256 or GCMP-128)) can be performed according to 802.11 or other standards.

A processor (e.g., a baseband processor, etc.) of a transmitting wireless device can add MAC headers and/or encrypt the data payload (904), according to some embodiments.

In step 906, the transmitter can prepare an Association ID (AID) for the transmission. The AID can be used to identify receiving STA(s) in trigger frames and/or in DL MU transmissions. The AID value can be obfuscated by a calculated random value that can be calculated by the transmitter and the receiver.

In step 908, before transmitting, the processor can obfuscate the MAC headers of the MPDUs. The obfuscation can be performed so that transmitter and receiver calculate a same pseudo random bit based encryption pattern. The transmitter can XOR the encryption pattern with the clear MAC headers.

In step 910, the processor can integrity protect the MAC headers, e.g., by calculating a message integrity check sum (MIC) for the MAC headers and adding it to the MAC headers. This can allows a receiver to (e.g., later) calculate a MIC check sum on the received MAC header by using the same calculation as the transmitter and comparing the calculated value to the MIC value included in the transmitted MAC header. If these MIC values match, the receiver can determine that transmitted MAC header content has not changed during the transmission. The transmitted frame contains a separate MIC for the payload of the frame that can be used similarly to verify that payload content is not changed during the transmission.

The GCMP-256 or GMAC -256 algorithm can be used to calculate the MAC header integrity protection. At the same time, the GCMP can encrypt some parts of the MAC header.

- In step 912, the processor can encode for transmission and the transmitter can send the outcome of the steps 902-910 OTA.

In step 914, a processor (e.g., a baseband processor, etc.) of a receiving wireless device (e.g., a receiver) can check whether the frame can be addressed for the receiver. As one possibility, if the AID value is present in the transmitted frame, then the AID can be used to identify the receiver and the processor can check whether the AID matches to the obfuscated AID of the receiver. For example, the processor can first check that obfuscated transmitter identification, e.g., BSS Color in the preamble or transmitter address (e.g., Address 1 in the MAC header), matches with the AP and then compare received obfuscated AID with the current obfuscated AID value that receiver can be using. Alternatively, the processor can XOR the offset value on AID to check whether the AID matches the identity of the receiver (e.g., to deobfuscate the AID and compare clear values).

In step 916, the processor of the receiver can check whether the obfuscated MAC addresses in the MAC header match with the obfuscated MAC address of the receiver. Similarly as with AID, the receiver can store its currently used obfuscated address or the receiver can deobfuscate the addresses and compare clear values.

In step 918, the processor of the receiver can check the integrity protection of the MAC headers by calculating the MIC checksum on the received MAC headers and comparing this to transmitted MIC. At the same process, the encrypted MAC header fields can be decrypted.

In step 920, the processor of the receiver can decrypt the received payload (e.g., by XORring the encryption pattern with the received (OTA) payload).

Figure 9 shows multiple described operations in a high level operation flow. It will be appreciated that various means of performing some or all of these operations are contemplated. Various examples of the different steps are further explained herein and/or are illustrated in subsequent figures. While some connections between various figures are explicitly mentioned herein, it will be appreciated that other combinations of figures can be used together as desired, according to some embodiments.

### Figure 10A and Figure 10B - Encryption and protection

Methods of Figure 10A and Figure 10B can include: TSF based MAC Encryption, TSF Slot handling, more precise TSF, and/or address field and encryption preparations, among various possibilities. These methods can build on existing WLAN data encryption hardware (e.g., Galois/Counter Mode algorithm). MAC headers can be encrypted/obfuscated and integrity protected. Duration field and frame control subfields can be transmitted clear OTA to ensure legacy interoperation. The transmitter and receiver can prepare for coming transmissions. Receiver can prepare to detect whether it receives a frame. MAC header encryption and decryption may not cause additional delays. Single user (SU), trigger based (TB), and multi user (MU) transmissions can be supported.

Embodiments described herein provide techniques for encryption and protection, e.g., of MAC headers and/or control frames. For example, according to embodiments of Figure 10A and Figure 10B, encryption of randomized MAC addresses can be performed. Such a scheme can aid in improved security.

Aspects of the method of Figure 10A and Figure 10B can be implemented by a STA or in communication with an AP, an AP in communication with a STA and/or by a STA in communication with another STA. The STA and/or AP can be as illustrated in and described with respect to various ones of the Figures herein, or more generally in conjunction with any of the computer circuitry, systems, devices, elements, or components shown in the above Figures, among others, as desired. The STA and/or AP can be MLD or non-MLD. For example, a processor (and/or other hardware) of such a device can be configured to cause the device to perform any element or combination of illustrated method elements and/or other method elements. For example, one or more processors (or processing elements) (e.g., processor(s) 101, 204, 302, 402, 432, 434, 439, baseband processor(s), processor(s) associated with communication circuitry such as 130, 230, 232, 329, 330, 430, etc., among various possibilities) can cause a wireless device, STA, UE, AP, non-AP MLD, and/or AP MLD, or other device to perform such method element(s).

Note that while at least some elements of the method of Figure 10A and Figure 10B can be described in a manner relating to the use of communication techniques and/or features associated with IEEE 802.11 specification documents, such description can be not intended to be limiting to the disclosure, and aspects of the method of Figure 10A and Figure 10B can be used in any suitable wireless communication system, as desired.

The methods shown can be used in conjunction with any of the systems, methods, or devices shown in the Figures, among other devices. In various embodiments, some of the method elements shown can be performed concurrently, in a different order than shown, or can be omitted. Additional method elements can also be performed as desired. As shown, this method can operate as follows.

It will be appreciated that Figure 10B illustrates some additional detail relative to Figure 10A. Any combination of the steps of the Figures 10A and 10B can be used as desired.

A processor (e.g., a baseband processor, etc.) of a transmitting wireless device can receive a frame for transmission (1002), according to some embodiments. The transmitting wireless device can be a STA or an AP, among various possibilities.

For example, the frame can be received from a higher layer of the transmitting wireless device such as an application layer. The frame can be received from a different processor of the transmitting wireless device such as an application processor, etc.

The frame can be intended for transmission from the transmitting wireless device to a receiving wireless device. The receiving wireless device can be a STA or an AP, among various possibilities.

The processor (e.g., baseband processor, etc.) of the transmitting wireless device can add MAC headers and (optionally) perform data payload encryption (1004), according to some embodiments.

The processor (e.g., baseband processor, etc.) of the transmitting wireless device can perform a first encryption (e.g., encryption 1) (1006) of the MAC header, according to some embodiments. This obfuscation, can be performed once for the header(s) to be included with the frame. In obfuscation, a GCMP encryption can be used to creates an offset pattern that can be XORred on top of obfuscated values. For example, the frame can be an A-MPDU, the first encryption can be performed once and can cover one or more (e.g., all) MAC headers of the MPDUs of the A-MPDU.

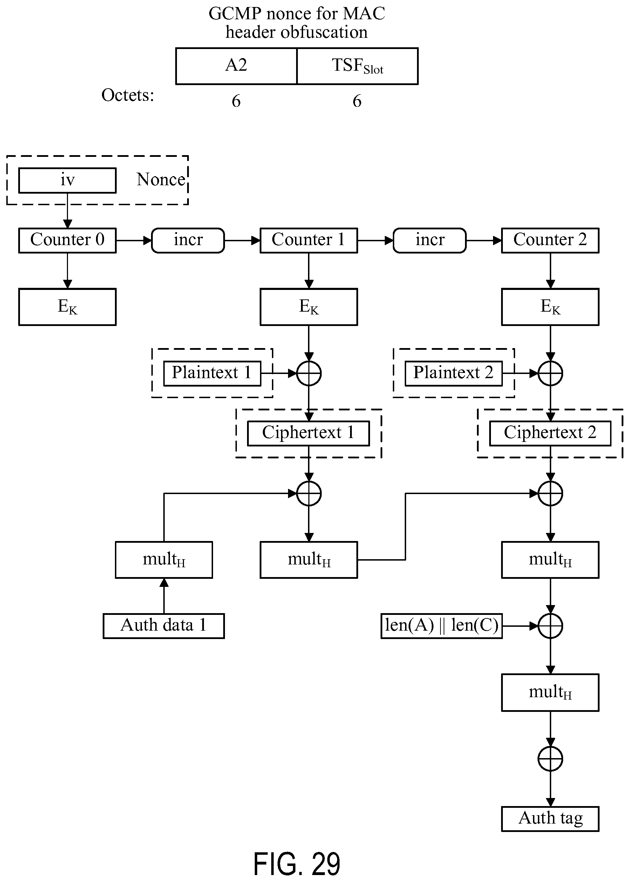

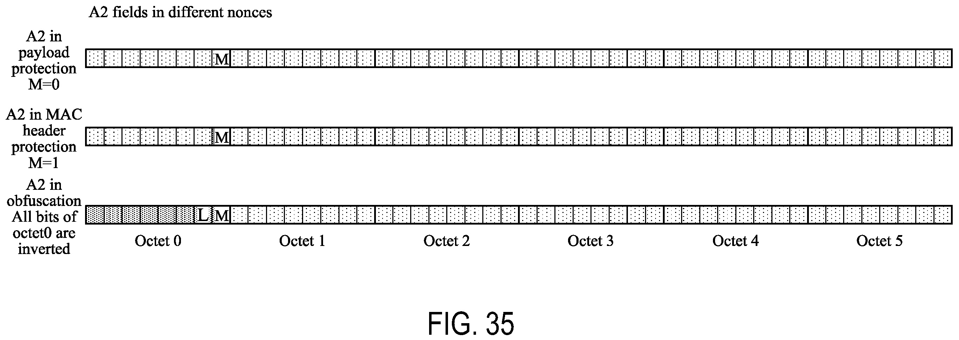

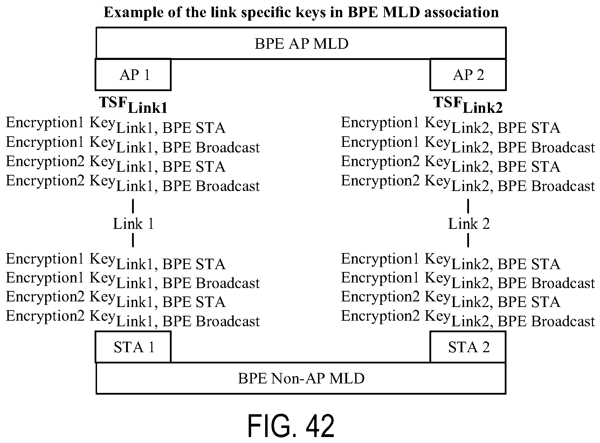

The offset value can be kept constant for some time (e.g., an interval) to allow the transmitter and receiver to prepare the obfuscated MAC headers. The offset can be created by using GCMP encryption that includes a nonce (e.g., as shown in upper part of the Figure 29, among various possibilities) with the transmitter address (TA) of the transmitter (e.g., modified as shown in lower part of the Figure 35, among various possibilities) and the starting time of the TSF slot. The obfuscation can have a pairwise of BSS specific encryption key (e.g., at least some alternatives are shown in Figures 42 - 43, among various possibilities).

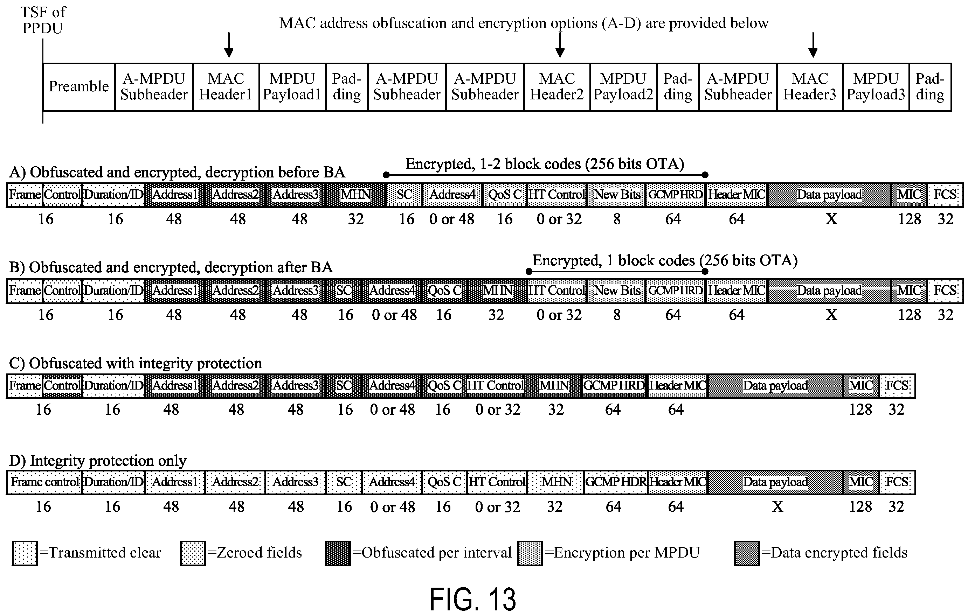

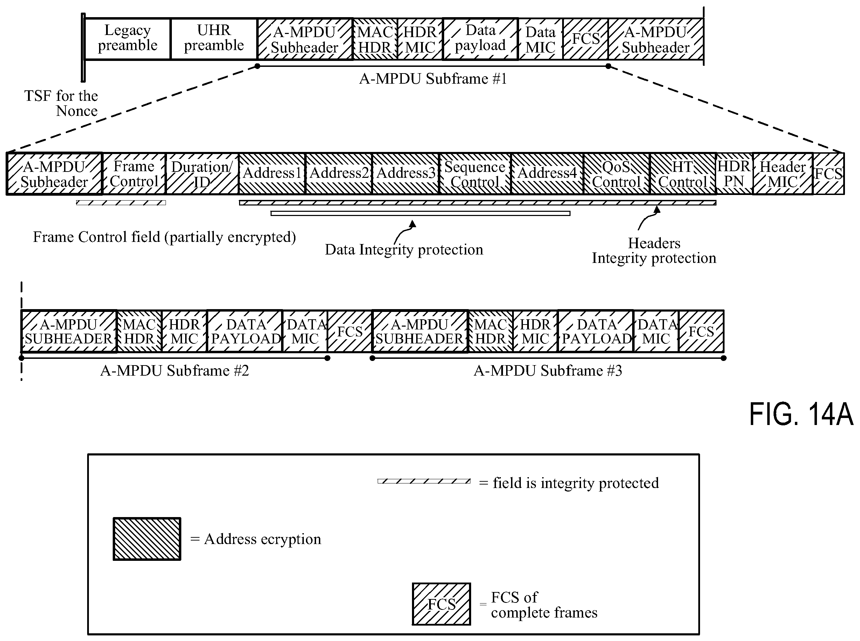

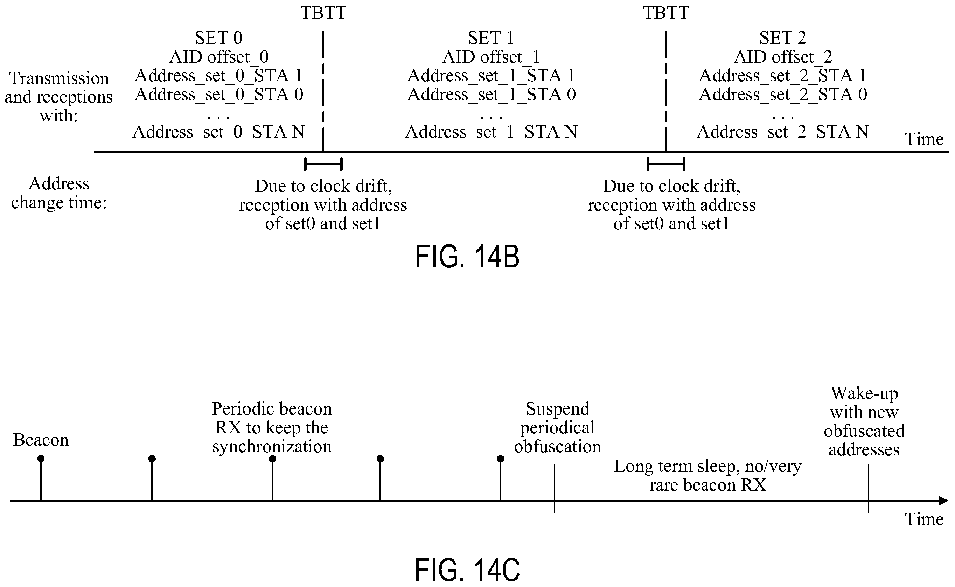

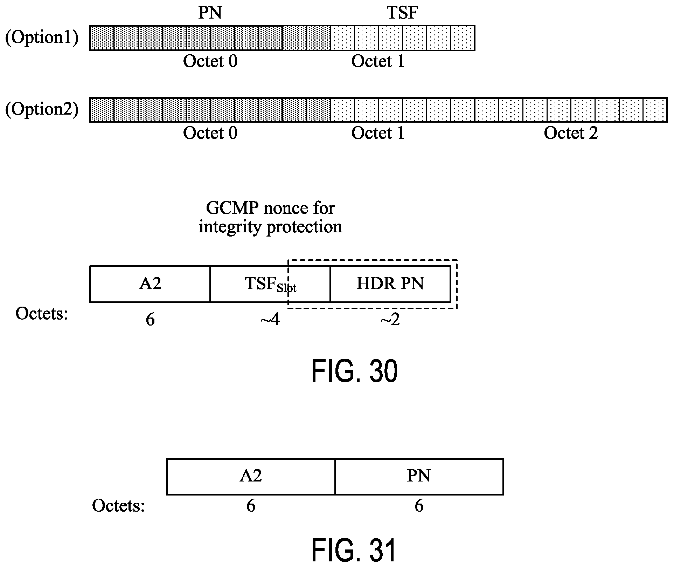

The processor (e.g., baseband processor, etc.) of the transmitting wireless device can perform a second encryption (e.g., encryption 2), that can be XOR operation of the offset for each transmitted MAC header (1008), according to some embodiments. For example, this encrypt can be as shown in Figure 29, 30 and/or middle of Figure 35, among various possibilities. The second encryption can integrity protect the specific MAC header and can encrypt fields of the MAC header that are encrypted separately for the MAC header, (e.g., as shown in figures 13 and/or 14, among various possibilities). To perform the second encryption, the processor can determine a nonce (e.g., as shown in Figure 30, among various possibilities). For example, the nonce can be based on TA (e.g., as shown in the middle of Figure 35, according to some embodiments), a time (e.g., TSF) and a MAC header specific header packet number (HDR PN)). The encryption 2 can use an encryption key (e.g., as shown in figure 42 -43, among various possibilities).

The second encryption can be performed separately for each transmitted MAC header of the MPDU. For example, if the frame can be an A-MPDU that aggregates one or more MPDUs , the second encryption can be performed one time for each MAC header of the included MPDU. For example, a first MPDU can be encrypted, e.g., obfuscated with timeslot specific offset value, in a first instance (e.g., with a first nonce and encryption key). The MAC headers of the same first MPDU can be encrypted, e.g., integrity protected and some selected fields can be encrypted, in a second instance (e.g., with a second nonce and encryption key).

If the frame can be intended to be an aggregated frame, the processor (e.g., baseband processor, etc.) of the transmitting wireless device can perform aggregation (1010), according to some embodiments. Some frames may not be aggregated.

The processor (e.g., baseband processor, etc.) of the transmitting wireless device can transmit the frame to the receiving device (1012), according to some embodiments. For example, the processor can encode the frame and send it to a radio for transmission.

Figure 11 illustrates phases to transmit MAC header Encrypted data, according to some embodiments. The methods shown can be used in conjunction with any of the systems, methods, or devices shown in the Figures, among other devices. In various embodiments, some of the method elements shown can be performed concurrently, in a different order than shown, or can be omitted. Additional method elements can also be performed as desired. As shown, this method can operate as follows.

In phase 0, a processor (e.g., baseband processor, etc.) of the transmitting wireless device can ensure that it has the encryption patterns available.

In phase 1, a processor (e.g., baseband processor, etc.) of the transmitting wireless device can receive a data payload (e.g., as in 1002).

In phase 2, a processor (e.g., baseband processor, etc.) of the transmitting wireless device can assign PN, TA, RA, and TID to the payload. The processor can encrypt the payload.

In phase 3, a processor (e.g., baseband processor, etc.) of the transmitting wireless device can assign a SN to the encrypted payload. Optionally, the processor can aggregate the payload (e.g., with others).

In phase 4, a processor (e.g., baseband processor, etc.) of the transmitting wireless device can define values to all MAC header fields of the transmitted MPDUs. The values can include PM, MD, EOSP, A-Control, etc.

In phase 5, a processor (e.g., baseband processor, etc.) of the transmitting wireless device can follow strict real time requirements in performing encryption 2. The MAC header(s) integrity protection can be calculated from nonencrypted MAC headers. Multiple MAC headers can be integrity protected in parallel, but each header can be separately integrity protected.

Alternatively, the MAC headers encryption can be specific to MAC header transmission order, e.g., the encryption pattern can be bit specific. For example, this can be done when a transmitter may not be capable to calculate GMAC-256 MIC in real time.

In some cases, the offset value can be XORred on the MAC headers (e.g., encryption 1) can be real time, or the encryption 1 XOR operation (e.g., encryption) can be performed before transmitting the frame.

Figure 12 illustrates phases to receive MAC header encrypted data, according to some embodiments. The methods shown can be used in conjunction with any of the systems, methods, or devices shown in the Figures, among other devices. In various embodiments, some of the method elements shown can be performed concurrently, in a different order than shown, or can be omitted. Additional method elements can also be performed as desired. As shown, this method can operate as follows.

In phase 0, a processor (e.g., baseband processor, etc.) of the receiving wireless device can ensure that it has the encryption patterns available.

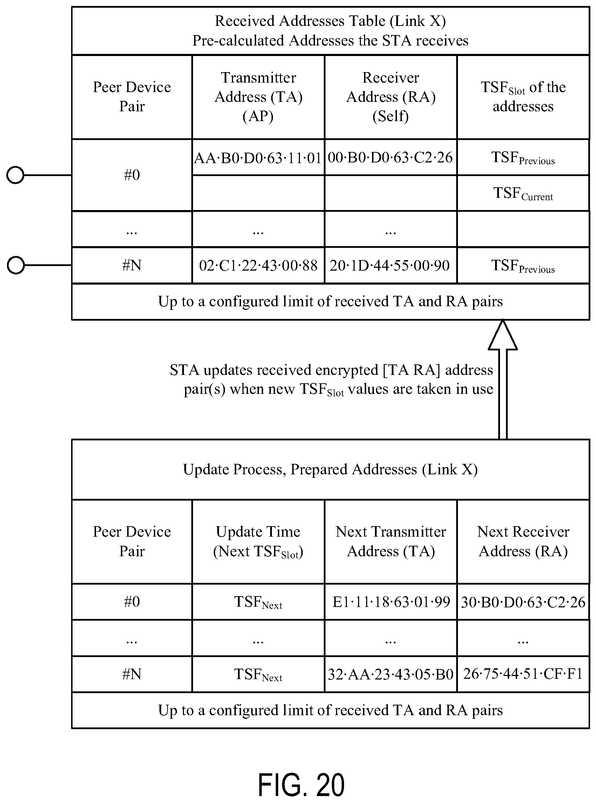

In phase 1, a processor (e.g., baseband processor, etc.) of the receiving wireless device can perform MAC header decryption. This can include checking whether the transmitter address (TA) and receiver address (RA) are known, e.g., compare with precalculated address table (e.g., as shown in Figure 20, among various possibilities). If the frame can be for the receiver, proceed to phase 2. Otherwise, discard the frame.

In phase 2, a processor (e.g., baseband processor, etc.) of the receiving wireless device can integrity verify and/or decrypt MAC header. The MAC header integrity verification can be calculated on nonprotected MAC header, e.g., on the MAC header to which the obfuscation can be removed first.

In phase 3, a processor (e.g., baseband processor, etc.) of the receiving wireless device can decrypt the data. This can be done according to existing standards, such as 802.11.

### Data frame obfuscation examples

Figure 13 illustrates multiple alternative MAC header encryptions, according to some embodiments.

Option A) shows a MAC header with only a (e.g., minimum) set of obfuscated fields available. The obfuscated addresses can be used (in some embodiments, can be required) to decide whether the receiver receives the frame. The obfuscated MAC header number can be used to create a nonce to decrypt the encrypted payload. WLAN transmissions are typically acknowledged and the acknowledgement can be transmitted a time (e.g., a SIFS (16µs)) after the data frame. The 16µs SIFS time can be used (and can be very demanding for this purpose) to prepare block ACK (BA). For example, the time can be used to verify that frame can be received correctly and to signal the sequence number (SN) of the received MPDU and the Traffic ID (TID) of the MPDU, that are signaled in the BA. The option A) has encrypted the SN, TID value and other MAC header fields. The MPDU specific encryption can provide excellent privacy protection for the fields, but the receiver needs to decrypt the fields to know the clear values of the fields, which can add delays to receiver. During the decryption, the receiver can also integrity verify the MAC header to verify that no attacker has modified the fields.

Option B) has obfuscated (e.g., XORred with offset) the fields that can be used (in some embodiments, can be required) to detect whether, the receiver receives the packet and the fields that can be used (in some embodiments, can be required) to be able to send BA back to the transmitter. This MAC header can be fast received and acknowledged. After the BA transmission, the receiver can decrypt the MPDU-specific encrypted fields. The receiver can also verify the integrity of the MAC header. This option provides very good privacy and allows fast BA transmission.

Option C) uses only obfuscation to change the values of the fields. The obfuscated fields can be (e.g., are typically) fast to return back to original value because all MDPUs in an A-MPDU can be obfuscated with the same obfuscation pattern. The obfuscation privacy depends on the obfuscation offset change interval. Short intervals, like 5 ms can provide very good privacy. The MAC header fields can be also integrity protected, enabling the receiver to verify whether it has received unmodified values. The integrity protection can be checked before or after BA transmission.

The Option D) only includes integrity protection. This alternative does not improve the privacy of the MAC headers, e.g., all fields are transmitted clear OTA. The integrity protection allows the receiver to verify that it has received unmodified values.

MAC headers can contain multiple fields which can be currently used to track a STA. The STA address, Sequence Number (SN), Packet Number (PN) can be used to track the STA. Note that MAC headers transmitted to UL and DL can contain separate SN and PN counters, so both of these fields can be used for tracking on both directions. Accordingly, there may not be benefit to encrypting these fields. The SN and PN values can be increasing in the transmissions. When the address changes, then these values can change too. In the address change, a new offset value can be XORed on these fields. The address change can be periodic with an offset that changes every X ms (e.g., at start of the TSFSlot).

Figure 14A illustrates a protected QoS Null Frame in the A-MPDU Subframe #1, according to some embodiments. A QoS Null frame can have (e.g., in the frame control field) a type field set to data and a subtype set to QoS Null frame. QoS Null frame can have no payload, e.g., only MAC headers encryption and integrity protection in use. QoS Null frame can have the same MAC header encryption and MAC header integrity protection schemes, according to some embodiments.

Figure 14A also illustrates an example of MAC header encrypted MPDUs transmission in an A-MPDU. The Preamble, UHR Preamble, A-MPDU Subframe and FCS fields are not encrypted in this example. The MAC header uses obfuscation to offset each MAC header address. Sequence control, QoS control, HT control and HDR PN are obfuscated. The non-encrypted fields enable legacy STAs to parse the A-MPDU, set the network allocation vector (NAV) from duration field, and parse the MPDUs, in order to check whether they receive the MPDU.

### BSS-Specific AID obfuscation

Association ID (AID) values can be encrypted, avoiding easy tracking through AIDs. Trigger frame content can be encrypted. The following figures illustrate the protected control frame concept that can be applied to trigger, BA request (BAR) and BA frames, for instance.

In some embodiments, a WLAN standard defined 11-bits long AID field from which a BSS can have only about 2000 AID values that can be allocated to associated STAs and non-AP MLDs. AP can decide how it allocates and/or assigns the AID values to the associated STAs. The smallest AID values can be used to signal buffered group addressed frames. Some AID values can be allocated for legacy STAs. Some AID values can be allocated for Wi-Fi 7 non-AP MLDs (e.g., the same AID can be used for the non-AP MLD on all APs in the AP MLD). Some AID values can be allocated for privacy enhanced STAs (AID values can be changed while the STA remains associated with the AP or AP MLD). In some embodiments, each STA that uses obfuscated AID values can have assigned AID (AID_assigned) value that is periodically obfuscated to get the AID value transmitted over the air (OTA AID). The OTA AID values can be changed for all privacy enhanced STAs at the same time, e.g., if AID_Offset can be applied to all random and changing OTA AID values. All STAs using randomized AID values can calculate the same AID_Offset value. The calculation can use BSS specific key and the same HASH algorithm. The new privacy enhanced STAs can calculate new obfuscated OTA AID value. For example, obfuscated OTA AID = start position of the privacy enhanced AIDs + (AID_assigned + Offset)Modulus(number of allocated slots for privacy enhanced STAs). The same OTA AID change time for all STAs can limit the frequency to change MAC addresses.

When a receiver receives OTA AID value, the receiver can detect whether the OTA AID value is the AID value allocated of the receiver. First, the receiver checks whether the OTA AID value is in range of obfuscated values. Then the receiver checks whether AID_assigned = (OTA AID - Offset)Modulus(number of allocated slots for privacy enhanced STAs).

Better protection for AID values can be achieved by per-MPDU encryption of the AID values. This better protection can be achieved with encrypted trigger frames and DL MU header frames. Such AID value can be obtained only by decrypting the encrypted trigger or header frame.

Figure 14B shows how to operate obfuscation with the BSS-specific AID offset, according to some embodiments. The figure shows that AP can calculate new MAC header offset to all associated STAs that use address obfuscation at the same time. This can ensure that when AID offset changes, the offset of all addresses and MAC headers can change at the same time. For instance, the addresses can be changed every Target Beacon Transmission Time (TBTT), multiple of TBTTs, every delivery traffic indication map (DTIM) TBTTs, or multiple DTIM TBTTs for instance. During the change of all offsets, there can be a time when receivers can receive with both the old addresses and the new addresses. This time can be compensation for possible clock drifts and can relax real time implementation requirements.

Figure 14B operation can be used by/for a mobile AP that can operate in power save, among various possibilities. A mobile AP can calculate all new offsets with a single calculation allowing processor to minimize the calculation time and to apply all offsets at the same time.

Figure 14C shows an example to suspend and resume the BSS specific address obfuscations, according to some embodiments. For instance, a STA that periodically obfuscates its MAC header and AID value can suspend periodic obfuscation, if the STA desires to save power and not maintain synchronization with the AP. STA can send suspend obfuscation notification request to the AP and stop operating in the periodic obfuscation. The periodic obfuscation suspend request can signal a TSF time for a one-time address obfuscation, which sets an offset for the specified TSF time. When the STA wakes up after the specified TSF time, the STA addresses will be obfuscated with the new values. The AP can respond with a periodic obfuscation suspend response that accepts the suspension of the obfuscations and provides new assigned AID value that can be taken into use at the STA specified TSF value. In some embodiments, the new assigned AID value can be outside of the values that are allocated to the STAs that periodically obfuscate addresses.

### Control frame obfuscation examples

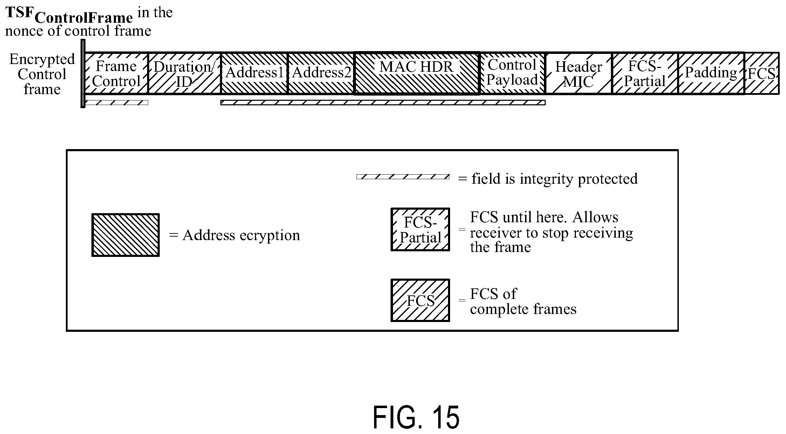

Figure 15 illustrates a protected control frame, according to some embodiments. control frames can have (e.g., only) MAC header encryption and integrity protection in use, e.g., no payload or payload encrypted parts, according to some embodiments. Frame control type can be signaled by a new frame type for protected control frame (e.g., type and subtype fields in the frame control field). The control payload can signal the control frame type (e.g., the real subtype information can be moved to control payload). In an alternative signaling approach, the protected frame bit can be set to 1 and type and subtype can signal the control frame type, but this can potentially leak the control frame type to eavesdroppers (e.g., because type and subtype fields may not be obfuscated in the frame control field). MIC can be added for the integrity protection. MIC can be before padding to enable fast termination of the frame reception. The FCS-Partial can be a checksum which can allow a receiver to verify correct reception of the frame. Control payload size and content can be control frame specific. Padding can be added to the protected control frame to allow more processing time to the receiver of the protected control frame. The protected control frame in the figure 15 can be obfuscated and integrity protected.

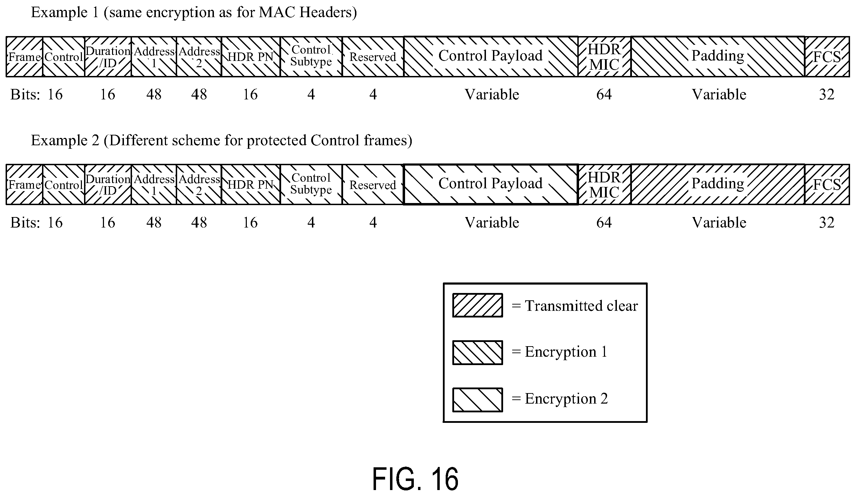

Figure 16 illustrates protected control frames, according to some embodiments. A new protected control frame can be defined. The subtype in frame control field can be set to: "protected control frame". The control subtype field after the HDR PN field can define the real subtype of the protected control frame. Allowed values can be or include BAR, BA and Trigger frame types.

In the example 1, the control frame fields can be obfuscated by using encryption1. Encryption2 can be used only for integrity protection and calculates MIC of the frame (same as MAC headers). In this operation, a separate offset value can be calculated for the control Payload value. The control payload can include obfuscated AID values and other control frame specific information, which is XORred with the separate offset value. The separate offset value can be calculated in the same way as the offset for the MAC headers and the value of the control frame offset is changed when the addresses are obfuscated. Example 1 shows fully obfuscated control frame.

In the example 2, Encryption 1 obfuscates frame control, address1, address2 and HDR PN fields. The control subtype and control payload can be encrypted and integrity protected by encryption2. The encryption2 can encrypt the control payload in the same way as data payload, e.g., complete codewords created on the control payload. The encryption 2 can calculates the MIC by using the Encryption1 obfuscated fields (e.g., Frame control, Address1 and Address2) as additional authentication data (AAD). AAD can be part of the integrity protection, but it can be not encrypted. The Encryption1 and Encryption2 can use the same Nonces as the MAC header protection. Padding can allow more reception time for the receivers. Some embodiments can include only obfuscated control frame headers and integrity protection of the control payload. The AID values can be obfuscated in the integrity protected control payload.

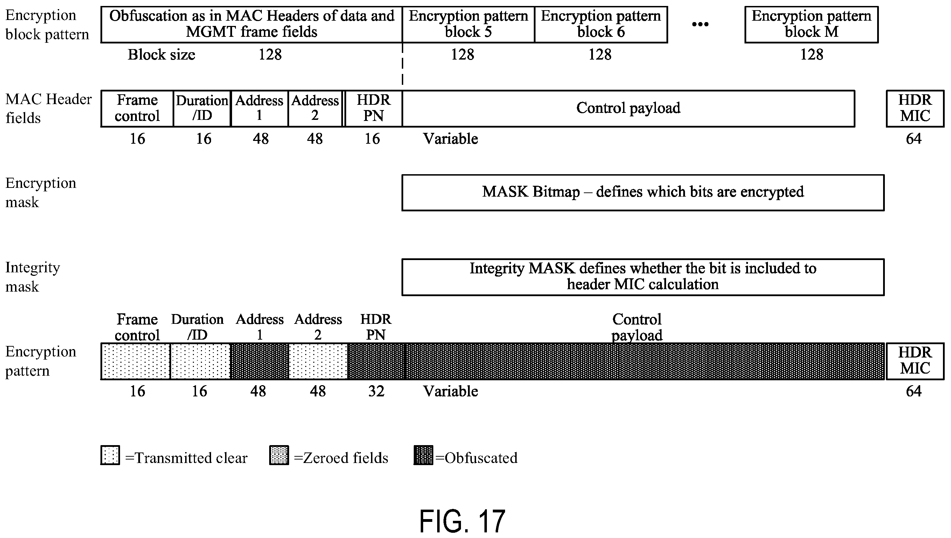

Figure 17 illustrates an encrypted control frame as shown in example 1 of the Figure 16, according to some embodiments. To keep the same addresses and HDR PN values as in MAC headers of the MPDUs, the same offset can be applied. The use of the same address and HDR PN values can allow the transmitter and receiver to receive frames with a single precalculated obfuscated address and HDR PN values. The calculation can create additional offset patterns that can be used to obfuscate the control frame payload. For instance, first two 256 bits long offset patterns or the first four 128 bits long offset patterns, can be used to obfuscate the MAC header values. The subsequent/following offset patterns can be applied to obfuscate the control frame payload.

The encrypted control frame can have control frame type specific mask that identifies the obfuscated fields. For instance, a trigger frame, BA or BAR frame can have a structure where AID value is repeating on fixed positions and other than AID values are obfuscated with the offset pattern. The OTA AID values can be used in the control frame and these values can be obfuscated separately.

NOTE: in some embodiments, the header MIC can be present, but partial FCS can be not present. In this case, the matching received MIC and calculated MIC values can indicate correctly received protected control frame.

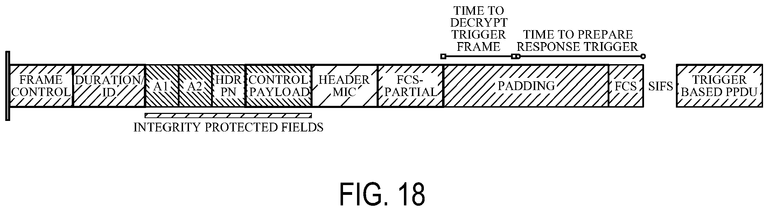

Figure 18 illustrates an example of padding for additional processing time, according to some embodiments. The trigger frame can include more padding for the receiver to compensate the trigger frame decryption and integrity verification time.

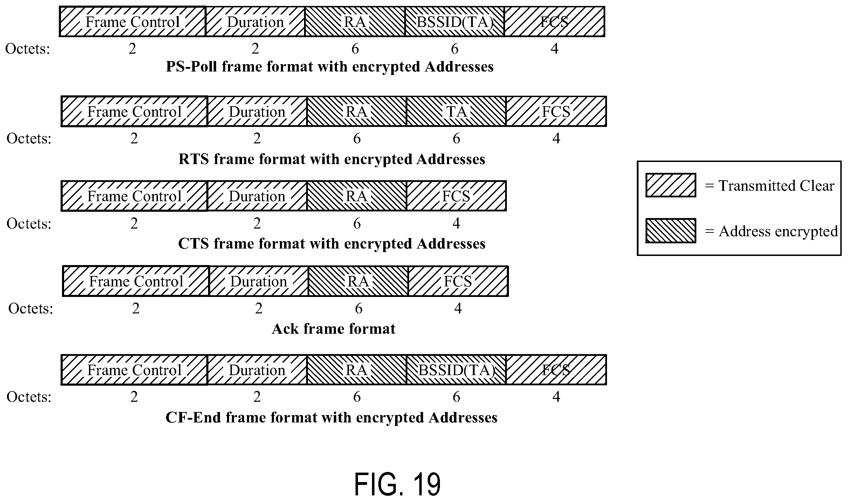

Figure 19 illustrates examples of control frames with encrypted addresses, according to some embodiments. RTS, CTS, CF-END, PS_Poll, and ACK frames can carry MAC address(es), type and subtype fields. These frames can use only address encryption, e.g., obfuscation with offset value. The offset value can be XORred on addresses so that the receiver detects the same TA and RA as in all other values. This implementation can simplify some processes because the address locations are in the same position of the frame body in all frames.

In CTS-To-Self frame, the address can be set to transmitter address with TA obfuscation. The transmitter address can be selected according to receivers. If an AP sends the CTS frame and the CTS frame is followed by transmission to multiple STAs, the TA can be set to broadcast obfuscated AP address. If the CTS-to-self frame is followed by transmission to a single STA, the TA can be set to the address used by the transmitter in this obfuscated address pair. A CTS transmitted as a response to RTS frame can have the address set to the TA of the RTS frame, e.g., the RTS value can be copied to the CTS frame.

The second octet of the frame control fields can be zeroed. For backward compatibility second octet of the frame control fields can be obfuscated with offset.

The ACK frame contains the RA of the asked frame. The RA and TA of BA can be set to addresses on acknowledged frame. If BA can be broadcasted, RA can be set to broadcast address.

BAR frame and Trigger frame that can be part of A-MPDU contain the same TA and RA addresses as all MPDUs in A-MPDU.

### Obfuscation and timing preparation

Figure 20 illustrates a technique for deciding whether to receive an OTA frame, according to some embodiments.

A receiver can determine to receive (e.g., decode) an OTA frame, when the OTA frame's TA and RA match with a TA and RA pair in the Received Addresses Table. In other words, if the TA and RA of the OTA frame can be found (as a pair) in any of the peer device pair lines 0-N of the table, for either the current or previous TSFₛₗₒₜ, then the receiving device can determine to decode the OTA frame.

The Received Addresses Table can contain all received encrypted and clear TA and RA pairs of a STA or AP. The table can contain complete pre-calculated encryption bit string. Alternatively, the receiver can calculate the SN and PN offsets if the received OTA frame can have matching RA and TA pair. The address table can be used to check the received addresses and to detect the offset and encryption keys for the MAC header and payload. The table can be used also for frame(s) transmission to select the transmitter address and receiver address and offset or parameters needed to calculate the offset for the transmission.

For each TSFₛₗₒₜ, the STA prepares the next address pairs for the comparison. This can be a real time operation and/or can be done in advance. Precalculating the addresses in advance can allow the calculations to occur in the background and the processor can distribute its workload more evenly.

Address pairs can be updated at different times, depending on the link specific TSFSlot duration, TSFSlot change times and TSF value, e.g., how well the STA can be synchronized with the TSF of the AP. Note, that AP MLD can have multiple affiliated APs, so each AP can have its own address table of the received addresses of the associated STAs. A STA can operate in multiple WLAN BSSs, e.g., infrastructure networks, or have P2P connections to multiple STAs at the same time. Each one of these networks and connections can have an TA RA pair maintained in the received address table.

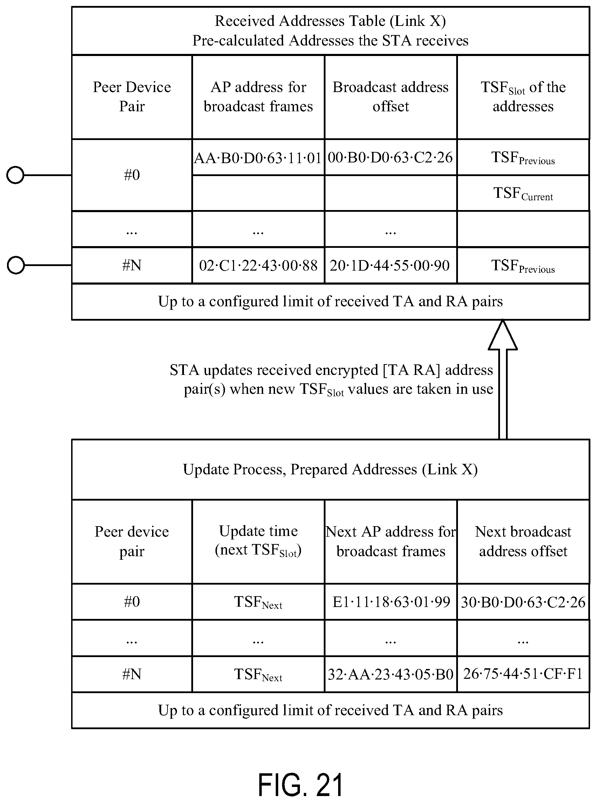

Figure 21 illustrates an address table using unicast and broadcast addresses, according to some embodiments. The AP address, or transmitter address, can contain an address that can be used to transmit group addressed frames or frames in a TXOP that can contain unicast frames addressed to multiple receivers. For instance this TA can be used in a trigger frame that allocates RUs to multiple STAs. If transmitter address (TA) of received frame matches, then the RA offset field can specify an offset that can be XORred with the RA of the frame to get the true RA. The RA can be group address or broadcast address, or it can be unicast address.

OTA frame can be received on link X (e.g., one of multiple links), according to some embodiments. Each link can have a separate received address table. For example in the top portion, frames can be received with peer device pairs #0 to #N. When a new frame can be received, the receiver can determine whether to receive (e.g., decode) the OTA frame. The frame can be decoded when: a) its TA and RA match with one (e.g., any) of the TA and RA pair as in figure 20, or b) its TA matches to AP address and TA XORred with an AP address or TA broadcast address as in Figure 21. If the transmitter address matches to the broadcast TA address, then the STA can apply the receiver address (RA) the field offset to calculate the true value of the RA. Once the RA is known, the STA can forward the packet with the real RA value to the integrity validation and decryption (e.g., as shown in figures 9-12, among various possibilities). In some embodiments, an infrastructure AP only has a single instance in the broadcast address table that it uses to transmit the group addressed frames. A STA can have one entry per associated AP or peer to peer (P2P) link that transmits encrypted group addressed frames.

In some embodiments, the AP can apply only a single offset for all UL frames. In this approach, the AP can have a single address and the same BSS specific offset can be XORred on STA addresses. In this approach, the AP can calculate only a single offset which reduces address maintenance efforts in the AP. In some embodiments, the same offset can be used also for all UL and DL frames addresses. Alternatively, UL and DL can have direction specific offset.

STA updates full set of received address information at the new TSFSlot values. For each TSFₛₗₒₜ, the STA prepares the next address pairs for the comparison. This can be a real time operation and/or can be done in advance. Address pairs can be updated at different times, depending on the link specific TSFSlot duration and TSF value.

BSS can have individual key for unicast frames and a BSS specific or group key for groupcast frames to calculate offset values for obfuscation. STA can use AP transmitter address (TA) to receive broadcast frames. In these cases, the address table can contain an RA only offset value to calculate the true RA (group address) of the transmitted group frame.

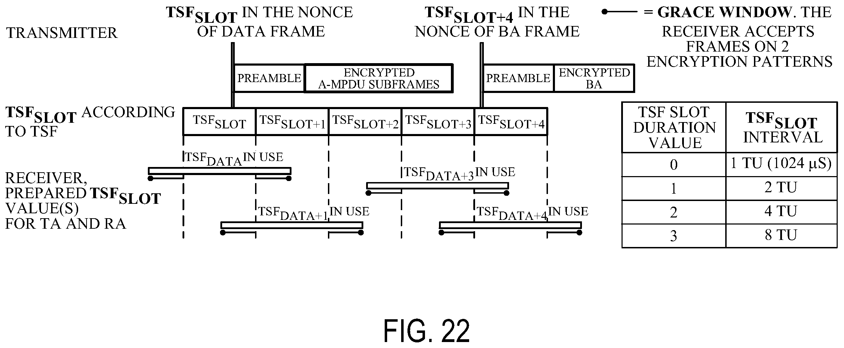

Figure 22 contains an example how the offset of the obfuscated addresses can be changed, according to some embodiments. In this example, a pair of devices can configure a joint schedule for the address changes. The duration of keeping the address in use can be based on multiple of a basic time, for instance multiple of time units (TU)s (1.024ms). The transmitter always transmits with the address that it has in use. The receiver can receive with old and new addresses to ensure correct reception operation, even if the synchronization of the devices may not be precise.

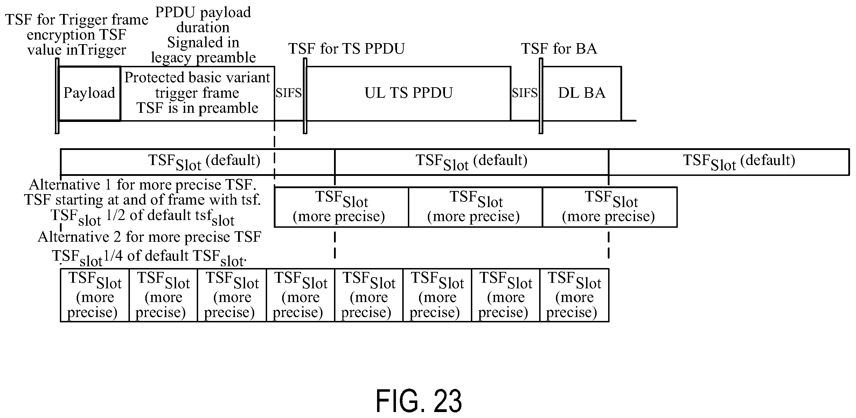

Figure 23 illustrates an example of protected control frame timing, according to some embodiments. Note: The trigger frame can allocate resource unit(s) (RU) to one or multiple STAs. Each STA can be configured to different TSF use. The receiver can synchronize with the TSF provided in the trigger frame and the receiver can be capable to maintain precise synchronization during the TXOP. The obtained synchronization allows the transmitter and receiver to calculate the same offsets. One possibility to benefit more precise synchronization can be to use more frequent address offset changes. The devices can agree on more frequent offset creation interval during the TXOP. The following frames transmitted within the TXOP can have updated address information. The main benefits of this scheme are available on the multi-user (MU) transmissions where multiple STAs receive DL transmission or transmit UL transmission at the same time. The frequent address obfuscation can complicate attacker tracking of the STA. For instance, in Figure 23, the STAs are identified by the AID in the trigger frame. The changing MAC addresses in the solicited trigger based UL frame and block ACK frames can benefit privacy, e.g., by making STA tracking more complicated.

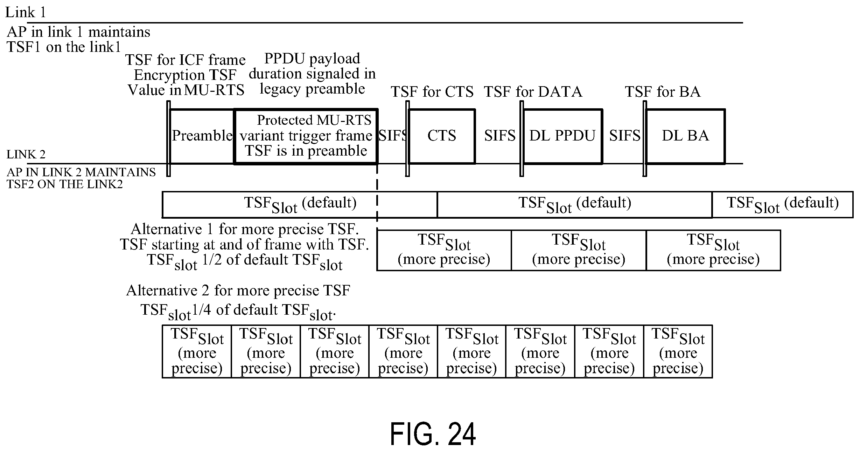

Figure 24 illustrates an example of enhanced multi-link single radio (EMLSR) operation with protected ICF, according to some embodiments. A power saving STA can be configured to initially use a loose TSF synchronization that can be maintained by receiving Beacon frames signaling buffered data. For example, in loose synchronization, at a (e.g., each) transmission opportunity (TXOP), the transmitter and receiver can synchronize to a more precise TSF. The TXOP initiating frame can contain TSF information. EMLSR uses initial control frame (ICF) transmissions such as MU-RTS frame or Buffer Status Request Poll (BSRP) trigger frame. The associated AP can send MU-RTS frame or BSRP trigger frame to initiate DL TXOP on the link for the STA. The ICF can be integrity protected and obfuscated; and the ICF can contain TSF for the STAs. The STAs that have allocated RU in the ICF can switch to more precise TSFSlots for the TXOP duration. This can allow all frames to use different obfuscated addresses.

An associated STA can receive trigger frames containing TSF of the BSS. AP can include TSF to all protected control frames.

The more precise TSF slots can be used also on UL transmissions. A STA sending UL frames to the AP can include a protected control frame (or frames) prior to any UL single user (SU) PPDU transmission to the AP. A protected RTS, or MU-RTS frame can can be used as a protected control frame.

NOTE: The EMLSR can operate on multiple links. Link1 and Link2 can have the following link specific settings: MAC header protection; TSF Slot duration; more precise TSF Slot duration; TSFLink1 and TSFLink2; and TSF running rate. A MAC header encryption and the same TSF slot durations can be used on all links.

### Frame reception process

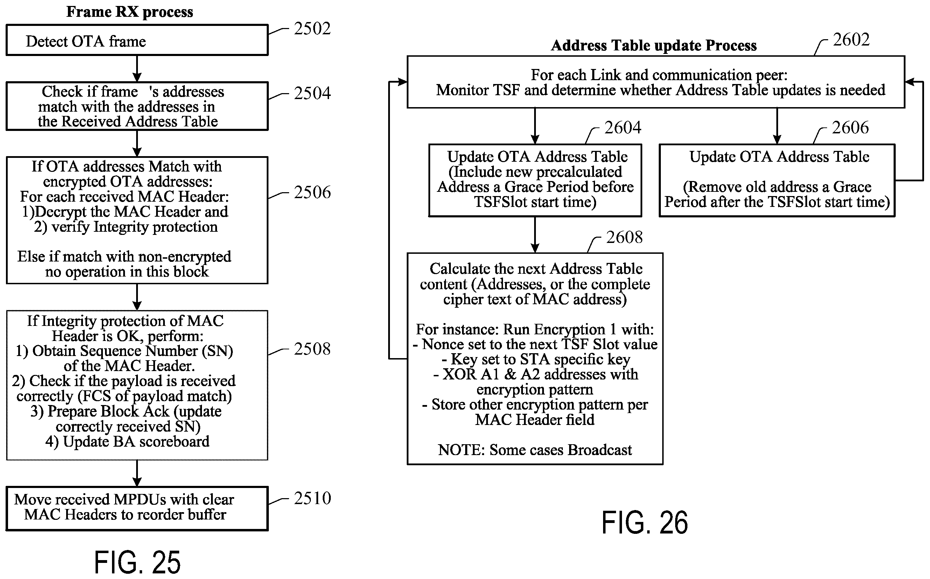

Figure 25 illustrates a method for a receiving device, e.g., corresponding to methods of Figure 10A and Figure 10B. The method can include: TSF based MAC Encryption, TSF Slot handling, more precise TSF, and/or address field and encryption preparations, among various possibilities.

Embodiments described herein provide systems, methods, and mechanisms for encryption and protection, e.g., of MAC headers and/or control frames. For example, according to embodiments of Figure 25, encryption of randomized MAC addresses can be performed. Such a scheme can aid in improved security.

Aspects of the method of Figure 25 can be implemented by a STA in communication with an AP and/or by a STA in communication with another STA. The STA and/or AP can be as illustrated in and described with respect to various ones of the Figures herein, or more generally in conjunction with any of the computer circuitry, systems, devices, elements, or components shown in the above Figures, among others, as desired. The STA and/or AP can be MLD or non-MLD. For example, a processor (and/or other hardware) of such a device can be configured to cause the device to perform any combination of the illustrated method elements and/or other method elements. For example, one or more processors (or processing elements) (e.g., processor(s) 101, 204, 302, 402, 432, 434, 439, baseband processor(s), processor(s) associated with communication circuitry such as 130, 230, 232, 329, 330, 430, etc., among various possibilities) can cause a wireless device, STA, UE, AP, non-AP MLD, and/or AP MLD, or other device to perform such method elements.

Note that while at least some elements of the method of Figure 25 can be described in a manner relating to the use of communication techniques and/or features associated with IEEE and/or 802.11 specification documents, such description can be not intended to be limiting to the disclosure, and aspects of the method of Figure 25 can be used in any suitable wireless communication system, as desired.

The methods shown can be used in conjunction with any of the systems, methods, or devices shown in the Figures, among other devices. In various embodiments, some of the method elements shown can be performed concurrently, in a different order than shown, or can be omitted. Additional method elements can also be performed as desired. As shown, this method can operate as follows.

A processor (e.g., a baseband processor, etc.) of a receiving wireless device can detect a frame received over the air (OTA) from a transmitting wireless device (2502), according to some embodiments. The receiving wireless device can be a STA or an AP, among various possibilities. The transmitting wireless device can be a STA or an AP, among various possibilities.

The processor (e.g., baseband processor, etc.) of the receiving wireless device can determine if the addresses (e.g., TA and RA) of the frame match a pair of addresses in a received address table (2504), according to some embodiments.

If the addresses do not match, the processor can discard the frame, according to some embodiments.

If the addresses do match, the processor can decrypt the MAC header of the frame (2506), according to some embodiments. For example, for each received header, the processor can decrypt the header (e.g., based on encryption 2) and verify integrity protection.

If the integrity protection can be verified, the processor can proceed to decode the frame (2508), according to some embodiments. For example, the processor can obtain the SN, verify a frame payload checksum (FCS), generate a BA, and update BA tracking.

The processor can perform reordering (2510), according to some embodiments.

It will be appreciated that Figure 10B illustrates some additional detail relative to Figure 10A. Any combination of the steps of the Figures 10A and 10B can be adapted for use by the receiving device as desired, e.g., and incorporated into the method of Figure 25.

### Address table update process

Figure 26 illustrates a method for a receiving device, e.g., corresponding to methods of Figure 10A and Figure 10B.

Aspects of the method of Figure 26 can be implemented by a STA in communication with an AP and/or by a STA in communication with another STA. The STA and/or AP can be as illustrated in and described with respect to various ones of the Figures herein, or more generally in conjunction with any of the computer circuitry, systems, devices, elements, or components shown in the above Figures, among others, as desired. The STA and/or AP can be MLD or non-MLD. For example, a processor (and/or other hardware) of such a device can be configured to cause the device to perform any combination of the illustrated method elements and/or other method elements. For example, one or more processors (or processing elements) (e.g., processor(s) 101, 204, 302, 402, 432, 434, 439, baseband processor(s), processor(s) associated with communication circuitry such as 130, 230, 232, 329, 330, 430, etc., among various possibilities) can cause a wireless device, STA, UE, AP, non-AP MLD, and/or AP MLD, or other device to perform such method elements.

Note that while at least some elements of the method of Figure 26 can be described in a manner relating to the use of communication techniques and/or features associated with IEEE and/or 802.11 specification documents, such description can be not intended to be limiting to the disclosure, and aspects of the method of Figure 26 can be used in any suitable wireless communication system, as desired.

The methods shown can be used in conjunction with any of the systems, methods, or devices shown in the Figures, among other devices. In various embodiments, some of the method elements shown can be performed concurrently, in a different order than shown, or can be omitted. Additional method elements can also be performed as desired. As shown, this method can operate as follows.

Note that while at least some elements of the method of Figure 26 can be described in a manner relating to the receiving device, such description can be not intended to be limiting to the disclosure, and aspects of the method of Figure 26 can be used by the transmitting wireless device. Moreover, aspects of Figures 20-22, among others, can be incorporated into the method of Figure 26.

A processor (e.g., a baseband processor, etc.) of a wireless device can maintain one or more address table(s) for the wireless device (2602), according to some embodiments. The address table(s) can include current addresses that can be associated with valid encryption operations for any link(s) with any devices that it can be communicating with. The wireless device can be a transmitting and/or receiving wireless device on any of the link(s). The address table can be updated periodically and/or as needed.

The processor can determine to add a new entry in the address table (2604), according to some embodiments. This determination can be in response to approaching or entering a grace period prior to a next TSF slot.

The processor can calculate a new entry (2606), according to some embodiments. For example, the processor can determine a nonce for encryption 1 using the next TSF slot value. The processor can apply the addresses to determine an encryption pattern and can store an encryption pattern that can be associated with a valid frame for the next TSF slot or during a grace period preceding the slot. In other words, the stored encryption pattern (e.g., table entry) can be a series of bits representing valid address pair appropriately encrypted for the next TSF slot.

In some embodiments, an address/encryption offset can be determined for broadcast or groupcast messages. For example, an encryption offset can obfuscate group addressed transmissions. The transmission can have one obfuscated address being an indicator of a transmitter and another obfuscated address being an indicator of an broadcast service or a groupcast, etc.

An AP can schedule multiple STAs' address offset renewal to occur at the same time. This can reduce AP power consumption by making all changes at the same time and reducing the number of processor activations.

Similarly, the processor can determine to remove one or more old table entry (2608), according to some embodiments. For example, in response to a grace period of a previous TSF slot expiring, the processor can remove any entry or entries (e.g., addresses/encryption patterns, as previously encrypted in 2606) associated with the previous TSF slot. Removing multiple entries at the same time can reduce AP operating power and simplify the operation.

### Preparation and timing

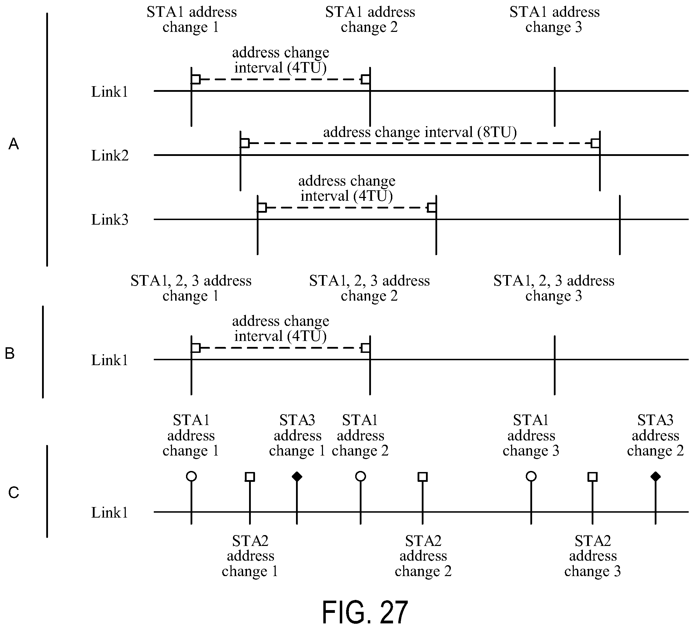

Figure 27 illustrates address obfuscation (encryption 1) timings in multi-link STA and AP, according to some embodiments.

The upper part of the Figure 27 (e.g., denoted by "A") describes an operation, where a STA and AP can negotiate and set separate TSF change times for each of the STA's links with the AP. A link specific change time (e.g., period and/or offset) can be defined by the STA (e.g., a first address obfuscation time). A link specific address change interval can configure address change on fixed time intervals. If desired (e.g., when the address change interval can be long), the STA can apply randomness in the address change interval. For example, every 4th change can be a base interval + 2 TUs. Other algorithms can be also possible.

When the STA operates in multiple links, each link can have different offset value. The link specific transmitter address use (A2) will create different offset values to each link, so no additional support for this can be required in the STA. Alternatively, all links can use the same offset value on all links.

The middle part of the Figure 27 (e.g., denoted by "B") shows an example, where one AP can serve multiple STAs and AP has set STAs MAC header offset changes to occur at the same time.

The lower part of the Figure 27 (e.g., denoted by "C") shows an example where associated STAs address transitions to occur at separate change time to each STA.

Change times can be set by the STA, by the AP, or by negotiation between the two.

If AP and STA have unicast key and BSS specific key, these keys obfuscation can change at the same or different times.

### Galois Counter Mode (GCM) encryption process examples

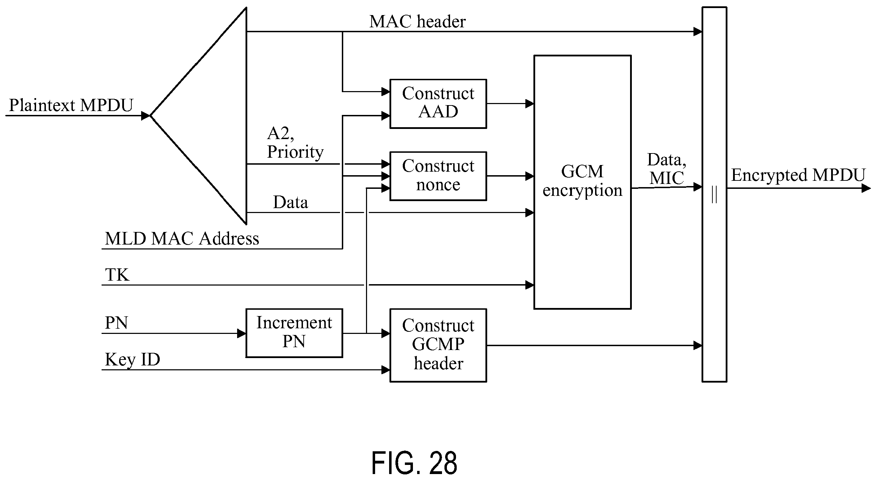

Figure 28 illustrates the encryption process of generating an encrypted payload to an MPDU, according to some embodiments. This same GCM encryption process can be used also to create offset for the encryption1 and to integrity protect and per MPDU encrypt MAC header fields in the encryption2. One advantage of using the same encryption approach can be to avoid new hardware and/or solutions.

The Figure 28 encryption process can be modified by feeding different transmitter address (e.g., MLD MAC address shown in the figure), Packet Numbers (PN), Plaintext MPDU content, encryption key and Key ID. These input parameters modifications and rules how the generated encrypted output can be used can enable the encryption 1 and encryption 2. In other words, the example input parameters illustrated in the figure can be substituted for other parameters. Different (or the same) parameters can be used in encryption 1 vs encryption 2, according to some embodiments.

Figure 29 illustrates GCM encryption process in another illustration. This figure shows that each GCM run will generate the integrity protection check sum as well as encrypted cipher text. In some embodiments, the encryption 1 only uses the cipher text as offset that can be XORred on top of the MAC headers. In some embodiments, the encryption 2 uses the integrity checksum created by the GCM algorithm and can optionally use the encrypted cipher text of the MAC header fields. When the MAC header fields are encrypted, the additional authentication data (AAD) can contain all non-encrypted field values and can include PHY preamble fields.

The upper part of the Figure 29 shows the nonce for encryption 1, obfuscation. This nonce uses transmitter address (e.g., A2) and the TSF of the start time when the address obfuscation occurs. The start time can be called TSFₛₗₒₜ. Note that fields used in the nonce of the obfuscation do not need to be transmitted OTA. The STA and AP ca know the values and can run the new offset values independently ready for the next obfuscation time.

Figure 30 shows alternatives for the Nonce values in the encryption 2, according to some embodiments. The nonce can contain TSF component that identifies the time when the data frame can be transmitted. Option 1 and Option2 contain alternative transmissions OTA of the nonce values. These values can be included to the MAC header every integrity protected MAC header. The Option 1 includes 6 bits long TSF value, including 2^4 bit of the TSF in the least significant TSF value and 2^9 as the most significant bit value. This allows the receiver to detect the TSF of the transmitter in steps of 16µs. The largest possible value can be 1024µs time, according to some embodiments. Alternatively, the TSF can include 14 bits showing up to 262ms time, according to some embodiments. The OTA transmitted TSF can be used to determine whether the data frame can be a replay from an attacker. Each transmitted PPDU can have the same TSF value. The packet number contains a value up to 1023, which can be the same size as the maximum block ack window size. The PN can be increased by one for each transmitted MPDU in a PPDU. Thus, the PN does not limit the number of transmitted MPDUs in a PPDU. The actual nonce that can be used in the encryption contains ~ 4 octets (30 bits) of TSF value. The MSB TSF values are not transmitted OTA to reduce transmission overheads.

The Figure 31 shows a nonce used currently for the MPDU payload encryption, according to some embodiments. Here the A2 can be set to MLD address of the transmitter and PN can be set to Packet Number carried in the GCM Header in the MAC headers.

The Figure 35 contains alternative transmitter addresses for the GCMP. If, the implementations would use the same key, for instance a PTK, then each nonce can be unique. The different Nonce values can be achieved by using different transmitter addresses. For instance, in payload encryption, the A2 can be set to MLD address. In encryption 1, obfuscation, the nonce can use link address as A2. In some cases, the MLD address can have the same value as the link address. To avoid the use of the same nonce value, the Group/ Individual bit of the A2 used of encryption 1 nonce can be changed. This bit change would cause the A2 address to be group address. The encryption 2 can use link specific address that has the whole octet 0 value inversed. This ensures that all encryptions have different A2 addresses.

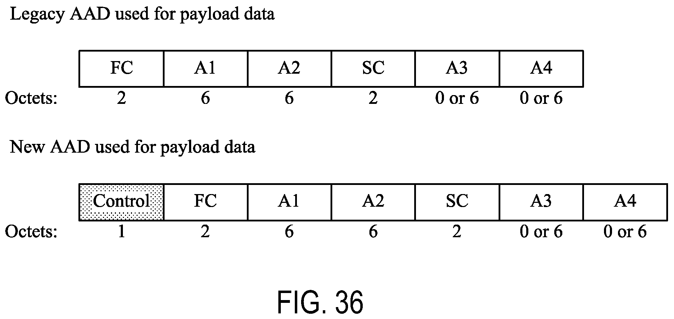

Another possibility to ensure that MAC header integrity protection and MPDU payload encryption produces different MIC values can be to add a control field to the AAD of the MAC header integrity checksum or to the AAD of the MPDU payload encryption (shown in the Figure 36, according to some embodiments). The control field ensures that input payload can be different in the integrity protection schemes.

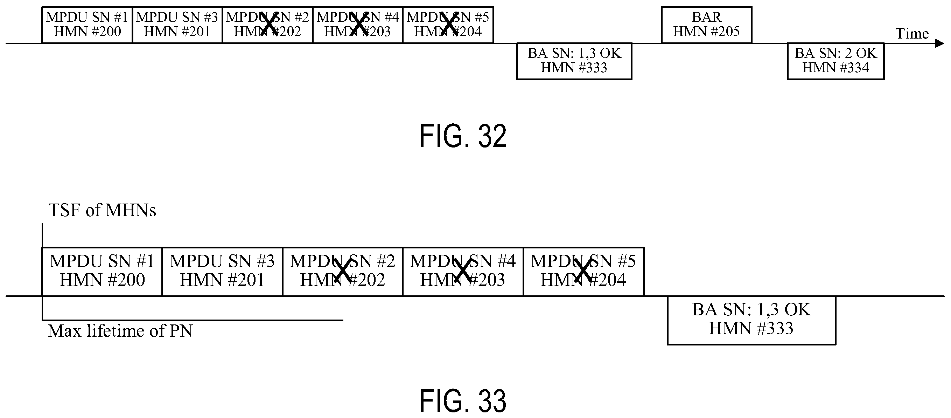

The TSF in the HDR PN can be used to avoid replays of the data frames as shown in the Figures 32-33, according to some embodiments. If the MAC header integrity protection does not include TSF component in the HDR PN, then the attacker can retransmit the frames which have been transmitted previously, but not received, e.g., not acknowledged by the BA. In Figure 32, the integrity protected frames do not have maximum transmission time, so an attacker could retransmit any transmitted frame which failed to be received. For instance, before the BAR with HDR PN 205 was transmitted, the MPDUs with HDR PN 202, 203 or 204 could be retransmitted. The MAC header can contain real time information that can change between transmission and retransmission. For instance power management bits can change, among various possibilities. These field value can be changed in retransmissions of the MPDUs. Retransmission of the failed MPDU could send incorrect information to the receiver.

Figure 33 shows the same transmission flow (as Figure 32) with TSF component in the HDR PN, according to some embodiments. In this case the receiver can check the transmission time of the frame and cancel reception of the retransmitted MPDUs that have a TSF indicating a frame that has too old transmission time. For instance, a receiver can drop frames that indicate TSF older than 256 µs. When the TSF can be used also in the as part of the MAC header Nonce, then the integrity check of the packet would fail, if the receiver uses different TSF time in the nonce.

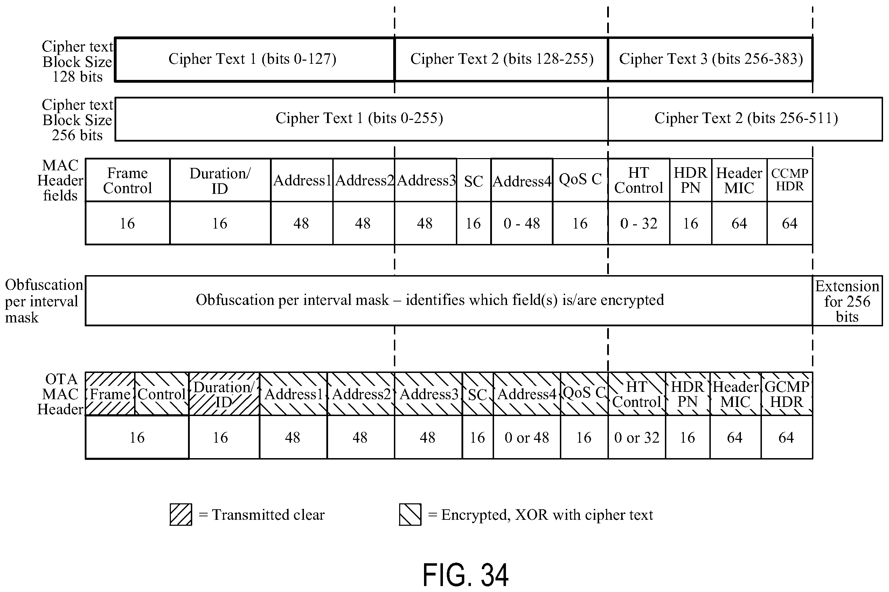

The Figure 34 shows how to create offset pattern for the data frames, according to some embodiments. The GCM produces ciphertext that can be specific for the TSFSlot. The cipher text can be created in blocks of 128 bits or 256 bits. The obfuscation mask can be configured in the association signaling, or it can be defined in the 802.11bn spec. The obfuscation mask can define which bits are obfuscated. The outcome of the obfuscation operation can be the OTA transmitted MAC headers. The obfuscation can be calculated to each transmitted MPDU separately, e.g., because the SN, PN, etc., MAC header field values can change in different MPDUs.

For every bit of the OTA address, the following algorithm can be run:
MACHeader[N]_{OTA}= MACHeader[N]_{CLEAR} XOR (CipherText[N] AND ObfuscationMask[N]), where N can be the obfuscated bit of the MAC header.

The first octet and FromDS, ToDS and +HTC fields of the frame control field can be transmitted clear OTA, so that Receiver(s) can detect whether Address 4 and HT control fields are present in the MAC header.

Figure 36 contrasts a legacy AAD with a new AAD (e.g., including a control field), according to some embodiments.

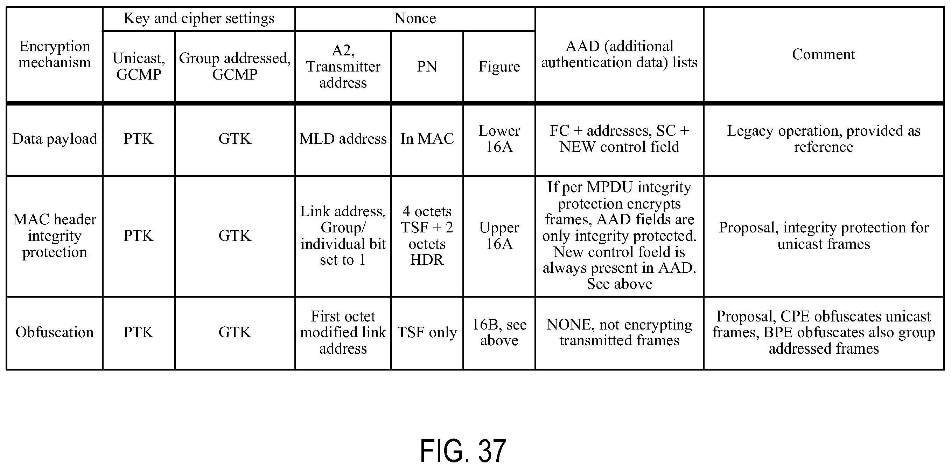

Figure 37 summarizes one alternative to use the pairwise transient key (PTK) for all unicast frames MAC header obfuscation, MAC header integrity protection and MPDU payload encryption and integrity protection, according to some embodiments. As discussed with respect to previous figures, the nonce can be unique in all encryption operations and the AAD can ensure that MIC can be different for all MPDUs. The figure 37 shows also one embodiment for the group key setting for the group addressed frames with obfuscated and integrity protected MAC headers and encrypted and integrity protected payload. The group frames can use group transient key (GTK) for encryption, according to some embodiments. Alternatively, each encryption could use separate encryption specific key. The data payload encryption would use PTK and GTK, the unicast obfuscated frames would use pairwise obfuscation key (POK) that can be used in the STA specific offset creation and group obfuscation key (GOK) can be used in BSS specific offset creation. The MAC header protection would use pairwise transient header key (PTHK) for unicast MAC header integrity protection and fields encryption and group transient header key (GTHK) for group addressed frames MAC header integrity protection and fields encryption.

### Alternatives for individual and group keys and hierarchies

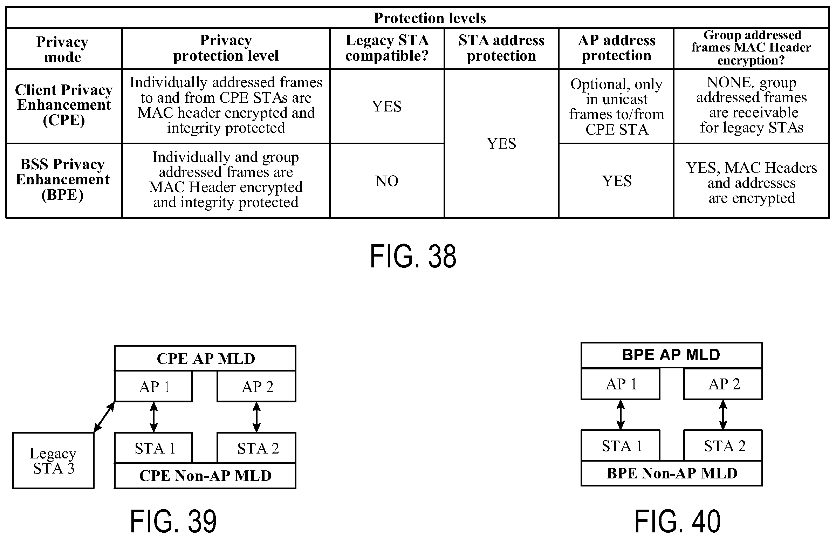

Figure 38 illustrates client privacy enhancement (CPE) and BSS privacy enhancement (BPE) privacy, according to some embodiments.

Figure 39 illustrates CPE, according to some embodiments. A CPE AP can be legacy STA compatible. MAC address encryption can be used on transmissions to/from unicast CPE STA. Group addressed frames' MAC headers can have no encryption, according to some embodiments.

Figure 40 illustrates BPE, according to some embodiments. BPE AP can be not legacy STA compatible, according to some embodiments. All frames can be MAC header encrypted.

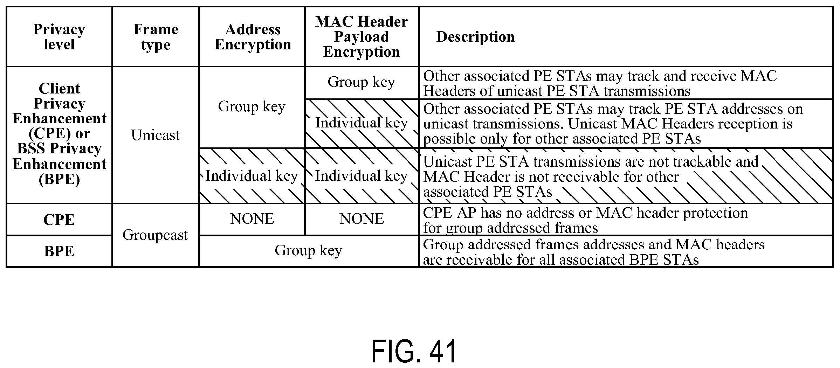

Figure 41 illustrates proposed alternatives for MAC header obfuscation and integrity protection/encryption, according to some embodiments. A receiver can have (e.g., strict) real time requirements to detect and select whether to receive a frame with the encrypted MAC addresses. Also, a large number of associated which all require AP to update offset for the MAC header obfuscation can require computation power on the AP and support on the hardware implementation. A group key can be used to create common BSS specific offset for the associated STAs that use MAC header obfuscation (e.g., which can simplify AP operating burden). In this approach all STAs can use the same offset, so the offset can be known to all STAs in the BSS. The STAs that are not associated with the BSS cannot determine the obfuscated addresses. Alternative approach can be to use STA specific pairwise key, which creates STA specific offset. The STA specific offsets are known only by the STA and the AP which improves STA privacy especially toward other associated STAs. The STA specific key use can require AP to calculate multiple STA specific offsets which can cause higher load to the AP.

The MAC header integrity protection can be calculated for each transmitted MPDU separately. Here, the number of the required calculations for the AP can be the same regardless of whether the STA specific key or group key can be used.

The group addressed frames are obfuscated and the MAC header can be integrity protected only for the BPE BSSs. The group addressed frames are transmitted only once an the legacy STAs in the CPE BSS prevent the group addressed frames Header obfuscation or new fields addition. In BPE BSS a group specific key can be used for the obfuscation and the integrity protection to ensure that all STAs in the BSS can receive the frames.

The UL and DL frames can have different MAC header encryption levels. For example, an AP can use STA specific key to encrypt the addresses of DL individually addressed frames, while the STA can use BSS-specific obfuscation UL. All associated PE STAs can use the BSS-specific group key to encrypt MAC addresses of all UL frames.

The MAC header payload (e.g., frame control, QoS control, and Sequence control fields) can use STA specific keys even if the addresses use group keys. The use of group keys can help AP to update the MAC addresses with less updates and can reduce the time consumption for the MAC header encryption and decryption. For instance, STAs can use group-specific key for UL transmissions and AP can have less strict real time requirements for the receiver. Similarly, AID fields can use group key, even if all other MAC header fields use STA-specific keys.

Figure 42 illustrates key hierarchy for the BPE AP and STAs, according to some embodiments. AP can send timing and synchronization function (TSF) time stamp for its BSS. All STAs that have a link with the AP can maintain TSF transmitted by the AP. Keys can be direction and/or link specific. A group key can be known by the AP and associated PE STAs. An individual key can be known only by the AP and the associated STA. The MAC header protection keys and their use can be configured in the link setup and association.

The obfuscation can user Unicast Obfuscation Transient Key (UOTK) for unicast frames obfuscation. UOTK can be STA-specific or it can be BSS specific. AP can use Group Obfuscation Transient Key (GOTK) for group addressed frames obfuscation.

The MAC header Integrity protection can use Pairwise Integrity Protection Transient Key (PIPTK) that can be used to integrity protect and encrypt the MAC headers of unicasted frames. Group addressed frames headers can use Group Integrity Protection Transient Key (GIPTK) to integrity protect the group addressed frames.

The MAC header obfuscation keys (Encryption 1 keys, e.g., UOTK and GOTK) and integrity protection and encryption keys (Encryption 2 keys, e.g., PIPTK and GIPTK) can be defined on link-level, MLD level, or on Multi-Link Mobility Domain Device (MLMD) level. The obfuscation and integrity protection can be used in 802.11 bn compliant network model (among various possibilities), where a STA and AP authenticate in MLMD level.

A link-level key can be defined for each AP separately. This means that STA and AP can store a separate key for each link. The link specific key can be also signaled separately for each link. If the AP and STA use the same key for UL and DL unicast transmissions, then a single link key for unicast frames MAC header obfuscation and integrity protection can be used. If the unicasts use direction specific key, then UL and DL keys can be stored separately. AP can transmit all group addressed frames, so group addressed frames MAC header obfuscation and integrity protection may not have a direction specific key.

802.11be or Wi-Fi 7 defined Multi-link Devices (MLD). An MLD can be one physical device that can contain one or more APs or STAs that operate on different links. For instance, a link can operate on 2.4, 5 or 6 GHz band. Typically, the links operate on non-overlapping channels. When a key can be defined in the MLD level, the APs belonging to the same physical device, e.g., AP MLD, share the same key. This means that the key that can be defined in MLD level can be used in communication on all APs that belong to the AP MLD.

802.11bn or Wi-Fi 8 might define a MLMD AP. A MLMD AP contains multiple AP MLDs in which the STA can roam fast between AP MLDs and use the same keys for the AP MLDs belonging to the AP MLMD. A key defined in the AP MLMD level can be inherited to AP MLDs and to each AP in the AP MLMD.

As discussed before, the obfuscation and integrity protection can use a nonce. The nonce can contain Address 2 (A2) that can be the transmitter address and a unique counter that can be a MAC header packet number (HDR PN) or TSF value, as defined for obfuscation or integrity protection. The obfuscation nonce and MAC header integrity protection nonce can be on the link level, e.g., each AP and STA can have a different nonce that they use to on the obfuscation or the integrity protection of the transmitted frames. The link level nonce can allow each link to operate independently, e.g., without coordination with other links. For instance, a HDR PN of the MAC header integrity protected nonce value can be increased by one for each MPDU transmitted in a link in which the nonce can be used. The link specific HDR PN can simplify the receiver operation, e.g., because the receiver does not need to combine HDR PN values received on multiple links to detect the replay of the MPDUs.

If the nonce uses TSF, the link specific operation can allow each AP to maintain different TSF value which can simplify AP implementation and allow link specific obfuscation times.

Figure 42 illustrates application of link specific keys in the case of a BPE association with MLD, according to some embodiments. Separate keys for MAC header encryption can be used without compromise to data encryption. Link specific keys can allow each link operates independently. Separate keys can be used for encryption 1 and 2. CPE can have only unicast keys for obfuscation, while BPE can have unicast and/or groupcast keys. CPE and BPE can have unicast and groupcast keys for integrity protection.

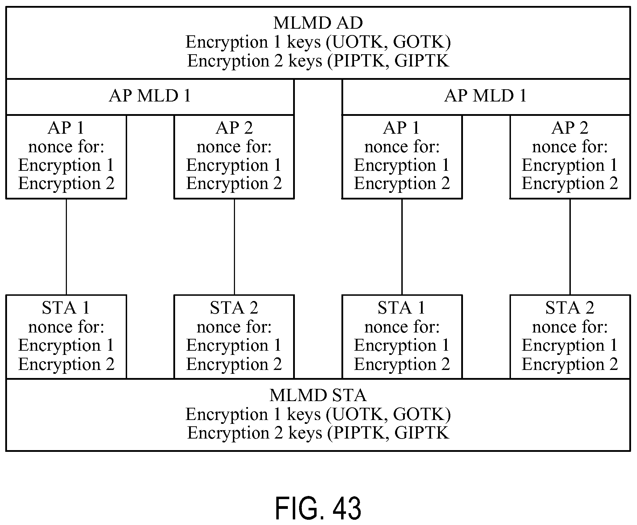

Figure 43 shows key hierarchy, where keys can be on MLMD level and nonces are on the link level, according to some embodiments. In some embodiments, the keys can be MLD specific and negotiated separately for the serving AP MLD. In this approach, the keys can be maintained in MLD level and the nonces are in link level.

### AID value obfuscation

Association Identifier (AID) can be an identifier that AP allocates to a STA in association. The AID has 11 bits and one STA has one allocated AID value. As discussed above the AP can use BSS specific AID offset that obfuscates the assigned AID values of the STAs. The BSS specific AID offset value can be known by all associated STAs of the BSS. A STA obfuscating its addresses can be tracked by other associated STAs. To overcome the STA tracking the AP can change the AID value that a STA has in use (assigned AID). The assigned AID value can be link specific, e.g., each link can assign a separate AID value, or it can be in MLD level, where an assigned AID value can be applied in the MLD level and all APs in AP MLD use the same assigned AID value for the STA.

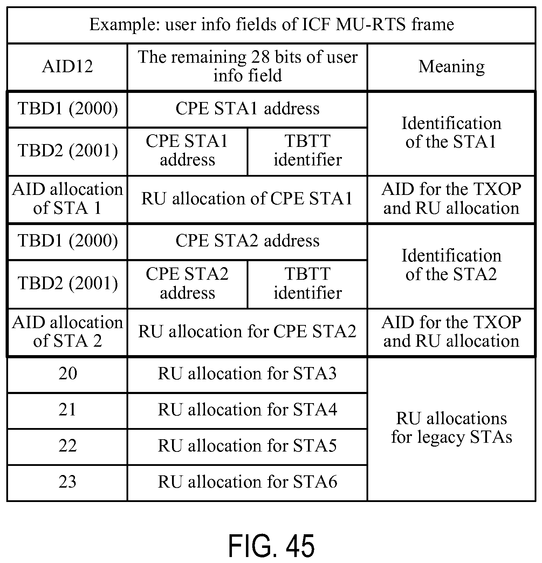

The AID value assignment can be done by using a trigger frame, which can be explained in the Figure 45, according to some embodiments.

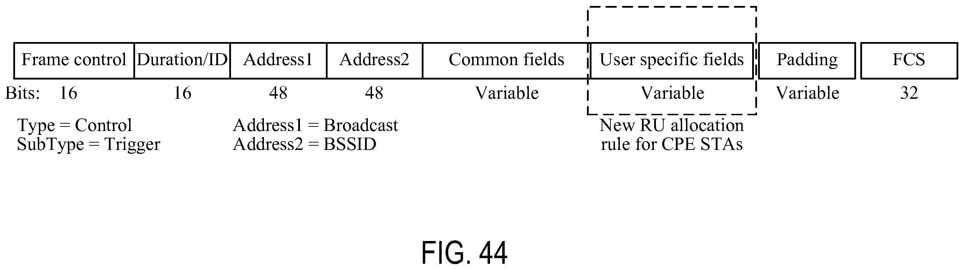

Figure 44 illustrates a trigger frame. A trigger frame can allocate Reservation Units (RU)s for the STAs by using user info fields. The user info fields can be used also to assign AID value for the STAs, according to some embodiments.

Figure 45 shows the use of the user info fields to assign AID value for a STA, according to some embodiments. User info field can be 40 bits in length and each user info field has AID12 field to specify the receiver. A 802.11bn specification can allocate special AID12 values to signal STA identification. For instance, two values, for instance 2000 and 2001 can be allocated to consecutive User Info fields. The 28 bits of the first user Info field contains bits 0-27 of the STA MAC address and the following User Info field contains the remaining 20 bits 28-47 of the STA address and 8 bits to signal a TBTT Identifier. If a Trigger has Trigger specific bits in the User Info field, these bits are reserved for these two User Info fields.

A TBTT Identifier identifies the set of addresses in use as shown in figure 14B. The TBTT Identifier ensures that all STAs know the correct address of the BSS, so that they can calculate the BSS specific AID offset correctly. If all STAs do not calculate the same AID offset, then there can be a risk that their transmissions collides. In some embodiments, a new AID12 value can be allocated only for TBTT Offset signaling in the remainder 28 bits of the User Info field.

The STA address can be used to identify the STA that will get new assigned AID value in the AID12 field of a third User Info field following the two User Info fields that contained the STA address and TBTT Offset. This third User Info field contains the RU allocation details for the STA. The RU allocation details are Trigger frame specific and they are defined in 802.11 be standard.

When AP assigns new AID values for a STA by using a trigger frame, the AP determines whether the STA received the trigger frame by receiving the STA transmission in the trigger-based transmission from the STA. If AP cannot receive the triggered transmission, the AP can transmit a new Trigger frame allocate again AID for the STA.

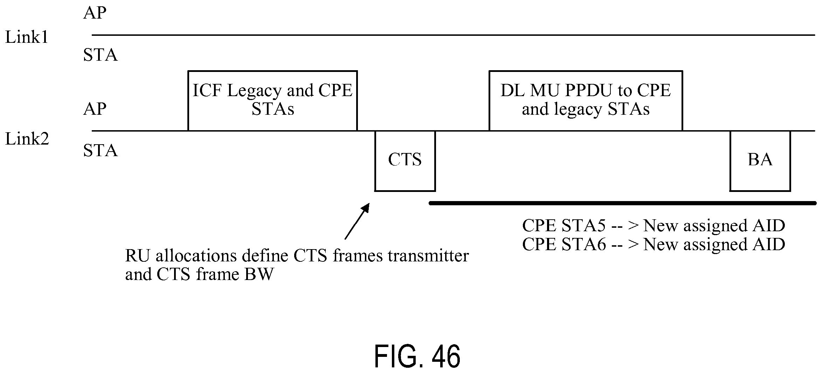

Figure 46 illustrates use of an assigned AID value in the coming DL MU PPDU. The Trigger frame can assign new AID value for a CPE STA and solicit CTS frame from the STA. The next transmitted frame from AP can be DL MU PPDU and AP can use the assigned AID value.

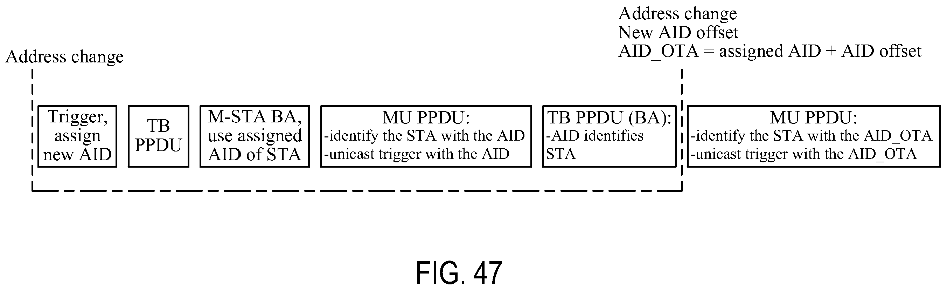

Figure 47 shows how the assigned AID value can be used together with BSS specific AID obfuscation as illustrated in Figure 14B. The assigned AID value can be used for the TBTT interval during which the AID value can be assigned. When the next BSS-specific AID offset can be calculated, the assigned AID value can be added with a new offset value as discussed above. This operation allows AP to assign new AID values that are not known by the associated STAs and ensures BSS-specific offset addition to provide better protection of the AID to non-associated STAs.

### Address collision impact mitigation and avoidance

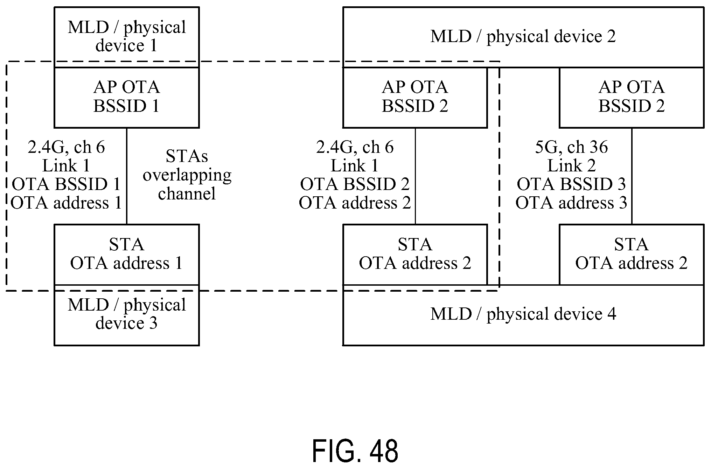

Figure 48 shows how randomly selected addresses can collide, under some circumstances. BSSs with operating channel overlaps can have the same address value in the APs and STAs, according to some embodiments. To get an address collision, both the Address 1 and Address 2 in the MAC header must be identical and the UL/DL direction indication in ToDs/FromDs bits of the frame control field must have the same value. When only STA address can be obfuscated, 46-bits of the MAC address are obfuscated. Individual/Group bit can be set to 0 and local/ Global bit can be set to 0 in all obfuscated addresses. To make address collision less likely, all addresses of the MAC header should be obfuscated. This allows 92 bits obfuscation.

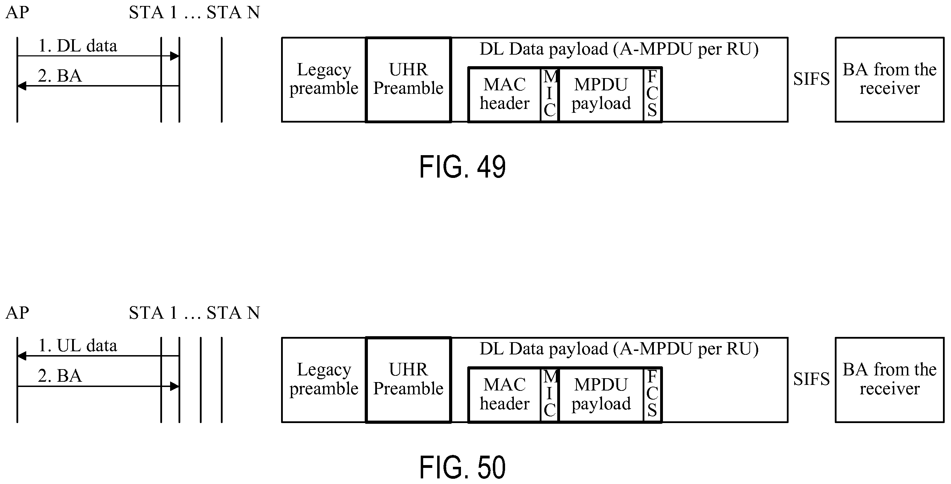

Figure 49 shows receiver operation when it receives a DL frame with obfuscated address(es), according to some embodiments. The receiver can perform 3 checks and cancel the DL frame reception if any of the checks fails. The target of the checks can be to ensure that only a single receiver transmits Block Ack (BA) for the frame. If more than 1 STA would transmit BA, the BAs can collide and the transmitter may not get BA. The first check can be done if the AID and BSS Color fields are present in the preamble. If the BSS Color and AID match, the receiver receives one MPDU header and checks whether the addresses identify it as a recipient. If the addresses match, the receiver calculates Frame Check Sum (FCS) for an MPDU and checks whether this matches to FCS carried in the MPDU. If the MCS can be correct, the STA can calculate HDR MIC or payload MIC, can determine if HDR MIC can be not available in the MPDU, and can check whether the calculated value matches with the received value. The MIC check value does not depend on the obfuscated addresses, so only the intended receiver can calculate the MIC correctly.

Figure 50 shows similar address check for the UL transmissions, according to some embodiments. In UL transmission case, the same 3 steps as in DL transmission check can be applied with one difference. If the obfuscated STA addresses collide, the AP can have multiple sets of keys for decrypting and de-obfuscating the MAC headers values, one per associated STA which address collides. If the FCS can be correct, but MIC can be incorrect, the AP should loop all keys of matching associated STAs through to discover correct keys for the received UL transmission.

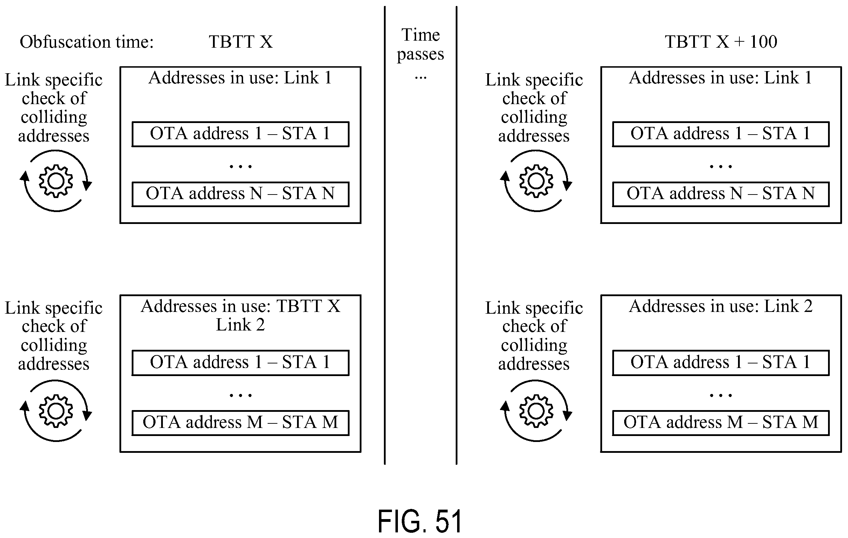

Figure 51 shows AP specific collision detection within the BSS, according to some embodiments. AP MLD can calculate the obfuscated addresses beforehand and can check if any obfuscated address in any of the APs will collide. If AP detects that some obfuscated address collides, the AP can request a STA to cancel offset update for a specific address update round. This signaling ensures that no STA has colliding addresses in the BSS.

## Claims

1. A method, comprising:
receive, from a higher layer, a payload for transmission in a first message to a receiver;
generate a header for transmission with the payload in the first message, wherein the first message comprises an aggregated MAC protocol data unit, A-MPDU;
perform a first encryption of the header to generate a first encrypted header, wherein the first encryption is according to a time interval associated with transmission of the first message and covers all MAC headers of a plurality of MAC headers of the A-MPDU;
perform a second encryption of the first encrypted header to generate a second encrypted header, wherein the second encryption is according to an attribute of the first message, wherein the second encryption is performed separately for each MAC header of the plurality of MAC headers of the A-MPDU;
append the second encrypted header to the payload to generate the first message; and
encode the first message for transmission to the receiver.

2. The method of claim 1, further comprising:
obfuscating group addressed control frames, data frames or management frames.

3. The method of claim 1, wherein the header comprises a media access control (MAC) header.

4. The method of claim 1, further comprising periodically changing an address included in the header.

5. The method of claim 1, further comprising periodically changing a field included in the header.

6. The method of claim 1, further comprising periodically changing an address included in the header while being associated with an access point (AP).

7. The method of claim 1, further comprising periodically changing a field included in the header while being associated with an access point (AP).

8. The method of claim 1, further comprising:
periodically changing a field or an address included in the header while being associated with an access point (AP), wherein said changing is performed at times determined based on a timing and synchronization function (TSF).

9. The method of claim 8, further comprising:
during a current TSF, precalculating and configuring the addresses available at a subsequent TSF.

10. The method of claim 1, further comprising:
obfuscating individually addressed control frames, data frames or management frames.

11. A method, comprising:
receive a first message, wherein the first message:
comprises an aggregated MAC protocol data unit, A-MPDU;
is encoded by a transmitter;
comprises a second encrypted header appended to a payload, wherein the second encrypted header is based on:
a first encryption of a header to generate a first encrypted header, wherein the first encryption is according to a time interval associated with transmission of the first message and covers all MAC headers of a plurality of MAC headers of the A-MPDU; and
a second encryption of the first encrypted header to generate the second encrypted header, wherein the second encryption is according to an attribute of the first message, wherein the second encryption is performed separately for each MAC header of the plurality of MAC headers of the A-MPDU; and
decode the first message.

12. The method of claim 11, wherein a field or address associated with the header is changed periodically.

13. An apparatus, comprising:
a processor configured to, when executing instructions stored in a memory, perform a method according to any of claims 1-12.

14. The apparatus of claim 13, further comprising a radio communicatively coupled to the processor.

15. A non-transitory computer readable memory medium comprising program instructions configured to cause a device to perform a method according to any of claims 1-12.

## Patentansprüche

1. Verfahren, umfassend:
Empfangen, von einer höheren Schicht, einer Nutzlast zum Übertragen in einer ersten Nachricht an einen Empfänger;
Generieren eines Headers für die Übertragung mit der Nutzlast in der ersten Nachricht, wobei die erste Nachricht eine aggregierte MAC-Protokolldateneinheit, A-MPDU, umfasst;
Durchführen einer ersten Verschlüsselung des Headers, um einen ersten verschlüsselten Header zu generieren, wobei die erste Verschlüsselung gemäß einem Zeitintervall erfolgt, das mit der Übertragung der ersten Nachricht verknüpft ist, und alle MAC-Header einer Vielzahl von MAC-Headern der A-MPDU abdeckt;
Durchführen einer zweiten Verschlüsselung des ersten verschlüsselten Headers, um einen zweiten verschlüsselten Header zu generieren, wobei die zweite Verschlüsselung gemäß einem Attribut der ersten Nachricht erfolgt, wobei die zweite Verschlüsselung für jeden MAC-Header der Vielzahl von MAC-Headern der A-MPDU separat durchgeführt wird;
Anhängen des zweiten verschlüsselten Headers an die Nutzlast, um die erste Nachricht zu generieren; und Codieren der ersten Nachricht für die Übertragung an den Empfänger.

2. Verfahren nach Anspruch 1, ferner umfassend:
Verschleiern gruppenadressierter Steuerungsrahmen, Datenrahmen oder Verwaltungsrahmen.

3. Verfahren nach Anspruch 1, wobei der Header einen Medienzugriffssteueradresse-Header (MAC-Header) umfasst.

4. Verfahren nach Anspruch 1, ferner umfassend das periodische Ändern einer in dem Header eingeschlossenen Adresse.

5. Verfahren nach Anspruch 1, ferner umfassend das periodische Ändern eines in dem Header eingeschlossenen Felds.

6. Verfahren nach Anspruch 1, ferner umfassend das periodische Ändern einer in dem Header eingeschlossenen Adresse, während eines Verknüpfens mit einem Zugangspunkt (AP).

7. Verfahren nach Anspruch 1, ferner umfassend das periodische Ändern eines in dem Header eingeschlossenen Felds, während eines Verknüpfens mit einem Zugangspunkt (AP).

8. Verfahren nach Anspruch 1, ferner umfassend:
periodisches Ändern eines Felds oder einer Adresse, die in dem Header eingeschlossen ist, während eines Verknüpfens mit einem Zugangspunkt (AP), wobei das Ändern zeitweise durchgeführt wird, die basierend auf einer Zeitgebungs- und Synchronisationsfunktion (TSF) bestimmt werden.

9. Verfahren nach Anspruch 8, ferner umfassend:
während einer aktuellen TSF, Vorberechnen und Konfigurieren der bei einer nachfolgenden TSF verfügbaren Adressen.

10. Verfahren nach Anspruch 1, ferner umfassend:
Verschleiern individuell adressierter Steuerungsrahmen, Datenrahmen oder Verwaltungsrahmen.

11. Verfahren, umfassend:
Empfangen einer ersten Nachricht, wobei die erste Nachricht:
eine aggregierte MAC-Protokolldateneinheit, A-MPDU, umfasst;
durch einen Transmitter codiert wird;
einen zweiten verschlüsselten Header, der an eine Nutzlast angehängt ist, umfasst, wobei der zweite verschlüsselte Header basiert auf:
einer ersten Verschlüsselung eines Headers zum Generieren eines ersten verschlüsselten Headers, wobei die erste Verschlüsselung gemäß einem Zeitintervall erfolgt, das mit der Übertragung der ersten Nachricht verknüpft ist, und alle MAC-Header einer Vielzahl von MAC-Headern der A-MPDU abdeckt; und
einer zweiten Verschlüsselung des ersten verschlüsselten Headers, um den zweiten verschlüsselten Header zu generieren, wobei die zweite Verschlüsselung gemäß einem Attribut der ersten Nachricht erfolgt, wobei die zweite Verschlüsselung für jeden MAC-Header der Vielzahl von MAC-Headern der A-MPDU separat durchgeführt wird; und
Decodieren der ersten Nachricht.

12. Verfahren nach Anspruch 11, wobei ein Feld oder eine Adresse, die mit dem Header verknüpft ist, periodisch geändert wird.

13. Einrichtung, umfassend:
einen Prozessor, der konfiguriert ist, um, beim Ausführen von Anweisungen, die in einem Speicher gespeichert sind, ein Verfahren nach einem der Ansprüche 1 bis 12 durchzuführen.

14. Einrichtung nach Anspruch 13, ferner umfassend ein Funkgerät, das mit dem Prozessor kommunikativ gekoppelt ist.

15. Nicht transitorisches computerlesbares Speichermedium, umfassend Programmanweisungen, die konfiguriert sind, um eine Vorrichtung zu veranlassen, ein Verfahren nach einem der Ansprüche 1 bis 12 durchzuführen.

## Revendications

1. Procédé, comprenant :
recevoir, en provenance d'une couche supérieure, une charge utile pour transmission dans un premier message à un récepteur ;
générer un en-tête pour transmission avec la charge utile dans le premier message, dans lequel le premier message comprend une unité de données de protocole MAC agrégée, A-MPDU ;
mettre en œuvre un premier cryptage de l'en-tête pour générer un premier en-tête crypté, dans lequel le premier cryptage est selon un intervalle de temps associé à la transmission du premier message et couvre tous les en-têtes MAC d'une pluralité d'en-têtes MAC de l'A-MPDU ;
mettre en œuvre un second cryptage du premier en-tête crypté pour générer un second en-tête crypté, dans lequel le second cryptage est selon un attribut du premier message, dans lequel le second cryptage est mis en œuvre séparément pour chaque en-tête MAC de la pluralité d'en-têtes MAC de l'A-MPDU ;
joindre le second en-tête crypté à la charge utile pour générer le premier message ; et
encoder le premier message pour transmission au récepteur.

2. Procédé selon la revendication 1, comprenant en outre :
l'obscurcissement de trames de commande, de trames de données ou de trames de gestion, adressées par groupe.

3. Procédé selon la revendication 1, dans lequel l'en-tête comprend un en-tête de commande d'accès au support (MAC).

4. Procédé selon la revendication 1, comprenant en outre le changement périodique d'une adresse incluse dans l'en-tête.

5. Procédé selon la revendication 1, comprenant en outre le changement périodique d'un champ inclus dans l'en-tête.

6. Procédé selon la revendication 1, comprenant en outre le changement périodique d'une adresse incluse dans l'en-tête tout en étant associé à un point d'accès (AP).

7. Procédé selon la revendication 1, comprenant en outre le changement périodique d'un champ inclus dans l'en-tête tout en étant associé à un point d'accès (AP).

8. Procédé selon la revendication 1, comprenant en outre :
le changement périodique d'un champ ou d'une adresse, inclus dans l'en-tête, tout en étant associé à un point d'accès (AP), dans lequel ledit changement est mis en œuvre à des moments déterminés sur la base d'une fonction de temporisation et de synchronisation (TSF).

9. Procédé selon la revendication 8, comprenant en outre :
pendant une TSF actuelle, le précalcul et la configuration des adresses disponibles au niveau d'une TSF ultérieure.

10. Procédé selon la revendication 1, comprenant en outre :
l'obscurcissement de trames de commande, de trames de données ou de trames de gestion, adressées individuellement.

11. Procédé, comprenant :
recevoir un premier message, dans lequel le premier message :
comprend une unité de données de protocole MAC agrégée, A-MPDU ;
est encodé par un transmetteur ;
comprend un second en-tête crypté joint à une charge utile, dans lequel le second en-tête crypté est en fonction :
d'un premier cryptage d'un en-tête pour générer un premier en-tête crypté, dans lequel le premier cryptage est selon un intervalle de temps associé à la transmission du premier message et couvre tous les en-têtes MAC d'une pluralité d'en-têtes MAC de l'A-MPDU ; et
d'un second cryptage du premier en-tête crypté pour générer le second en-tête crypté, dans lequel le second cryptage est selon un attribut du premier message, dans lequel le second cryptage est mis en œuvre séparément pour chaque en-tête MAC de la pluralité d'en-têtes MAC de l'A-MPDU ; et
décoder le premier message.

12. Procédé selon la revendication 11, dans lequel un champ ou une adresse, associé à l'en-tête, est changé périodiquement.

13. Appareil, comprenant :
un processeur configuré, lors de l'exécution d'instructions stockées dans une mémoire, pour mettre en œuvre un procédé selon l'une quelconque des revendications 1 à 12.

14. Appareil selon la revendication 13, comprenant en outre une radio couplée en communication avec le processeur.

15. Support mémoire non transitoire lisible par ordinateur comprenant des instructions de programme configurées pour amener un dispositif à mettre en œuvre un procédé selon l'une quelconque des revendications 1 à 12.
